# EUROPEAN PATENT SPECIFICATION

(11) **EP 2 830 290 B1**
(45) Date of publication and mention of the grant of the patent: **12.10.2016**
(21) Application number: 14178711.9
(22) Date of filing: 28.07.2014
(51) Int. Cl.: H04L 29/08, G06F 17/30, H04M 1/725

(54) **Communication of Pages via a Digital Cellular Telecommunication Network**
Kommunikation von Seiten über ein digitales zellulares Telekommunikationsnetzwerk
Communication des pages via un réseau de télécommunication cellulaire numérique

(30) Priority: 26.07.2013 CN 201310320891; 31.07.2013 US 201313956021
(43) Date of publication of application: 28.01.2015
(73) Proprietor: SAP SE, 69190 Walldorf (DE)
(72) Inventor: Zhang, Wei, 69190 Walldorf (DE)
(74) Representative: Richardt Patentanwälte PartG mbB

(56) References cited:
- EP-A1- 2 079 218
- US-A1- 2002 052 925
- US-A1- 2002 169 868
- US-B1- 6 675 212

## Description

### Field of the invention

The invention relates to a telecommunication method, and more particularly to communicating data pages via a network connection.

### Background and related art

Internet websites and content oriented applications are commonly used to-disseminate information or to complete assignments and tasks. A user can navigate through the websites or content oriented applications by submitting requests for a new page of content. This request can be in the form of a user interface command such as clicking navigational links, manipulation of objects shown on the display, or touch gestures. Based on the request, a new page of content can be presented.

The content of a page may be generated by a remote server. Different kinds of devices may be used for displaying the pages of content, e.g. desktop computers or mobile devices such as smartphones.

The European patent application EP 20729218 A1 describes a method and system for providing one or more status indicators associated with the request from a device for information from a website. Information received from the website is stored in a server side cache and the status indicators are generated based on the information in the cache. In response to a request from the device, one or more of the status indicators are downloaded or otherwise transmitted to the device. The status indicators may include an approximate delivery time for the information of the website.

Patent application US 20020052925 A1 describes a system and method for delivering targeted multimedia or video advertisements over the Internet while protecting user privacy. A software application is executed while a browser application runs on a user's computer. The application periodically accesses the server over the Internet to download targeted advertisements during user idle time and stores them locally. The server stores and updates a database of information for delivering the advertisements to appropriately selected users.

### Summary

It is an objective of the present invention to provide for an improved telecommunication method, computer program product and telecommunication system as specified in the independent claims. Embodiments of the invention are given in the dependent claims. Embodiments of the present invention can be freely combined with each other if they are not mutually exclusive.

In one aspect, the invention relates to a telecommunication method for communicating data pages via a digital cellular wireless telecommunication network.

A mobile telecommunication device receives a first page of digital content having been generated by a sender device via a network connection of the telecommunication network. The mobile telecommunication device is battery-powered and comprises a processor and a display. The mobile telecommunication device displays the first page on its display. The mobile telecommunication device sends a request for a second page of digital content to the sender device. The mobile telecommunication device starts receiving the second page of digital content via the network connection from the sender device. The digital content of the second page is sequentially receivable via the network in parts and the sequentially receivable parts are renderable by the mobile telecommunication device before the second page is received completely. The sender device sends the second page of digital content via the network connection to the mobile telecommunication device. The method comprises predicting if a time period required for completely receiving the second page predicting if a time period required for completely receiving the second page via the network connection and for rendering the second page of digital content is greater than a predefined first time period. For example, the prediction may be executed by the mobile telecommunication device or by the sender device or by the mobile communication device interacting with the sender device. For example, the rendering time could be predicted by the mobile telecommunication device and the time for transferring the second page via the network (which is the time required for receiving the page via the network) could be predicted by the sender device or vice versa, or the sender device could alone or the mobile telecommunication device alone could predict both the time required for transmitting the second page via the network completely and the time required for rendering the second page by a processor of the mobile telecommunication device. According to some embodiments, the mobile telecommunication device may combine both predicted times for predicting the time period required for completely receiving and rendering the requested second page.

In case a) the required time period is predicted not to be greater than the first time period, the mobile telecommunication device immediately renders and displays the sequentially received parts on the display before the second page was received completely.
In case b) the required time period is predicted to be greater than the first time period, the mobile telecommunication device receives the second page in the background and delays the rendering and displaying of the second page at least until the second page is received completely. After having received the second page completely, the mobile telecommunication device renders the second page and displays the second page on the display. Receiving the second page in the background may imply that the already received parts are not immediately rendered and presented to the user on the display and that the ongoing receiving of the page does not prohibit the user to interact with the currently displayed first page.

In case b) the mobile telecommunication device may render the second page after its complete receipt in the background. The expression "rendering a page in the background" may imply that fragments of a page having already been rendered are not automatically displayed. Said expression may also imply that other applications or functions, e.g. the interaction of a user with the first page, are not blocked or slowed down by the rendering. Thus, the user may still scroll within a currently displayed page while the second page is rendered.

Said features may be advantageous, because a highly flexible method for requesting and displaying pages via a network is provided that may reduce power consumption by the mobile telecommunication device and thus may extend the battery runtime while at the same time enabling a user to "smoothly" navigate between pages: if, for example, the network connection is very good, e.g. when the user is at home and uses his WLAN connection, the time period may be predicted not to be greater than the first time period according to case a). In this case, the received parts of the requested page will be rendered sequentially as soon as they are received. As a result, the second page may already be displayed when only e.g. the upper half of its content has been received and rendered, but due to the good network connection the user may not even recognize this as the sequential rendering and displaying of the received parts may be executed so fast that the user has the impression of a "sudden" appearance of the requested second page. The CPU consumption for managing and rendering the already received parts of the page thus may be limited to a comparatively short time interval and the computational overhead is small.

If, however, the network connection is poor, e.g. when the user is on a trip or resides in a region where there is only an instable or slow mobile phone network connection, the time period may be predicted to be greater than the first time period according to case b). In this case, the mobile telecommunication device delays the rendering and displaying of the second page at least until the second page is received completely. This may reduce the computational overhead related to keeping the already rendered parts in memory over a prolonged time period and repeatedly executing program routines for combining the already rendered parts with the newly rendered parts and/or for checking of a particular received part was already rendered or not. The total computational overhead related to managing such partially rendered information over a prolonged time period necessary for completely loading a page via a very slow network connection can thus be avoided.

Also, if the rendering of the requested second page or some of its parts is computationally highly demanding while the mobile telecommunication device comprises only a weak CPU and memory of very limited size such that the intermediate data structures generated during rendering need to be swapped, it may be more efficient and power saving to start with the rendering and the swapping only after having received the complete second page to reduce the computational overhead. Also, when the receiving of the page is completed, there may be more memory and CPU capacities available for the rendering process and swapping might be avoided because no additional memory may be required for managing the load process.

The steps executed selectively in case a) will be referred herein as "sub-method a)". The steps executed selectively in case b) will be referred herein as "sub-method b)".

The length of the first time period may be configurable by a user. The optimum value of the length of first time period may depend on the type of the date that is expected to be typically received and rendered, the expected or typically observed bandwidth of the used network connection, and other parameters. The predefined length of the first time period could be, for example, greater than 0.5 seconds, more preferentially greater than 2 seconds.

According to embodiments, the prediction by the mobile telecommunication device if the time period required for completely receiving and rendering the second page via the network connection is greater than the first time period comprises one or more of the following approaches i-iiv which are to be performed by the mobile telecommunication device or the sender device or both for predicting the required time for the receiving (loading) process:
i. The sender device or the mobile telecommunication device evaluating a connectivity history. The connectivity history is indicative of the times having previously been required for receiving (and thus also transferring) the second page completely; For example, the request history could be a log file that comprises the time required for loading a particular URL via a particular network connection. The time for loading said particular URL may have assigned in the log the type of the network connection (WLAN, mobile wireless network, a mobile wireless network of a particular mobile networks operator, etc). The time may further have assigned in the log a Wi-Fi-tower-ID or a cell-tower-ID being indicative of the Wi-Fi tower or cell tower used for establishing the network connection. In addition or alternatively, the time for loading a particular page may have assigned an identifier of a sender application being hosted by the sender device and having generated the second page. The connectivity history may be stored on the mobile telecommunication device or the sender device. Preferentially it is stored on the mobile telecommunication device.
*ii*. The mobile telecommunication device sending a test request to the sender device and monitoring the time for receiving a response to the test request. For example, the mobile telecommunication device and the sender device could have implemented a predefined request-response cycle wherein the sender device, upon receiving a test request, sends a predefined response of a predefined size to the mobile telecommunication device. The mobile telecommunication device has stored ("knows") the size of the predefined response and calculates, from a monitored time for receiving said response and from the stored predefined size, the time loading of a second page of a predefined expected size will require. Said predicted time may be used as the time period predicted to be required for completely receiving the second page via the network connection. This may be advantageous because also a network connection of one and the same mobile network operator or cell tower may have a different bandwidth depending, for example, on the distance of the user to the cell tower and/or the number of users being connected to the mobile network via said cell tower.
*iii.* The sender device executes the prediction of the time required for transmitting the second page to the client device and sends this information to the telecommunication device, e.g. in response to the request for the second page. The mobile telecommunication device receives the predicted transmission time and uses it as the predicted time required for receiving the second page. For example, the sender device could predict the required time for transferring the second page based on the site of its digital content.
*iv.* The sender device or the mobile telecommunication device performing a heuristics algorithm using a current bandwidth of the network connection as input. For example, the mobile telecommunication device could constantly monitor the bandwidth of the network connection, e.g. by monitoring network traffic of other applications running on the mobile telecommunication device. Said information may be used as input for predicting the expected loading time for a second page of a predefined expected size. Said predicted time may be used as the time period required for completely receiving the second page via the network connection. This may be advantageous for the same reasons as option ii). In addition, option iii uses information that is readily available and additional effort for implementing the test request-response cycles may be avoided.

According to embodiments the predicting if the time period required for receiving and rendering the second page of digital content is greater than the first time period comprises one or more of the following approaches v-vii for predicting the time required for the rendering:
v. The mobile telecommunication device evaluating a rendering history, the rendering history being indicative of the rendering times of the second page having been rendered previously.
   For example, the rendering history could be a log file that comprises the time required for rendering content received from a particular URL or from a particular application hosted by the sender device. The time for rendering said particular content may have assigned the type of the rendered data, e.g. images of various formats. The rendering history may be stored on the mobile telecommunication device.
*vi.* The mobile telecommunication device rendering a test page and monitoring the time for rendering the test page.
   For example, the mobile telecommunication device and the sender device could have implemented a predefined request-response cycle wherein the sender device, upon receiving a test request, sends a predefined response of a predefined size and content to the mobile telecommunication device. The mobile telecommunication device monitors the time required for rendering the predefined response and calculates, from said monitored time, the expected time for rendering a second page of a predefined expected size and composition. Said predicted time may be used as the time period predicted to be required for rendering the second page. This may be advantageous because depending on the type and number of other applications concurrently running on the mobile telecommunication device, the amount of available CPU power and thus also the time the rendering will require may significantly vary.
*vii.* The mobile telecommunication device or the sender device performing a heuristics algorithm using some current measurement data as input. For example, the mobile telecommunication device could use a current free CPU capacity and/or the total available CPU capacity as input. The sender device could use the size of the digital content of the second page or its content type (images, texts, etc) as input or could use an identifier of the device type of the mobile telecommunication device as input which may give some information on the CPU resources available in the mobile telecommunication device.

In case the sender device performs the prediction of the receiving time or the rendering time, the receiving time and/or the loading time may be transmitted via the network from the sender device to the mobile telecommunication device for enabling the telecommunication device to predict if the time required for both the rendering and for the loading of the second page are greater than the first time period or not.

In some embodiments or use case scenarios, the rendering time may be much longer than the loading time or vice versa or both processes might contribute significantly to the total processing time required for enabling a displaying of the requested second page. Thus, some embodiments may merely predict the rendering in dependence on current or past measurement values and combine said measurement values with a comparatively short predetermined time for the loading of the page. Other embodiment merely predict the receiving in dependence on current measurement values and combine said measurement values with a comparatively short predetermined time for the rendering process of the page in case the rendering of the expected content can safely be assumed to be quickly executable. Other embodiments may dynamically predict both the required rendering time and the required time for receiving the page via the network based on current or past measurement values such as history data, current bandwidth of the network connection, the time for receiving or rendering a test page, the current CPU load or the like.

According to embodiments for case b) the mobile telecommunication device delays starting of a rendering application until the second page is received completely, and uses the rendering application for rendering the received second page. This may be advantageous because CPU consumption by an idle rendering application may be avoided. Any running application usually consumes a given amount of memory and CPU even when it actually does not perform its actual function. By starting executing the rendering in a separate rendering application that is started after the second page was requested completely, the CPU consumption may be further reduced.

According to embodiments for case b) the mobile telecommunication device depriorises the rendering of the received second page and priorizes application programs executed concurrently to the rendering. This may be advantageous because it may prevent a "freeze" of the first page by the CPU being used to its capacity by the rendering. For example, a "freeze" of a scrolling movement of the user to navigate within the displayed first page and/or a blocking of a GPS functionality of the mobile telecommunication device may be prevented. According to embodiments, the rendering may selectively be depriorized only so far as to allow scrolling movements of the first pages with a higher priority than the rendering.

According to additional or alternative embodiments, for case b) the mobile telecommunication device restricts CPU consumption by the rendering of the received second page to a maximum value. The maximum value could be, for example, 70% of the available CPU capacity. This may prevent the blocking of the scrolling of the first page while the second page is rendered and may prevent the heating of the CPUs by a 100% CPU load. Rendering may be a complex, computationally demanding process and may result in significant CPU load and heating. The prevention of heat development may also prolong battery lifetime (number of times a battery may be recharged).

According to embodiments, the state of the first page is set to a reading state by the sender device or by the mobile telecommunication device. A first page being set to reading state indicates that the first page comprises a default set of displayed UI elements and comprises a default set of user-activatable functions, e.g. selectable buttons or links, that are enabled without restriction. In case of b), the telecommunication device sets the state of the first page of digital content to a retiring state, wherein the retiring state of the first page indicates that the second page was requested but is not ready for displaying its complete digital content yet. As the "old" first page does not disappear (it merely changes its state or is replaced by an intermediate page, see below), a situation where the user does not see any "useful" data content on the display (when the old page has disappeared while the new page is not fully displayed yet) may be avoided. A second page that is not ready for displaying its complete digital content yet may be a second page that is, at a given moment, not completely received by the mobile telecommunication device via the network and/or that is not yet rendered completely.

According to embodiments one or more navigational links on the first page are enabled when the state of the first page is set to the reading state. The one or more navigational links on the first page are disabled when the state of the first page is set to the retiring state. Deactivating navigational links may protect an impatient user from "clicking randomly" on links displayed as part of the first page while the requested second page is received and/or rendered in the background. A wrong click might result in the loading of a page the user is actually not interested in, thereby further increasing the time until the requested second page can be displayed.

According to embodiments the mobile telecommunication device for case b), upon determining that the second page is has been received and rendered completely, sets the state of the first page to a transacting state. A first page in transacting state is ready for being replaced by the completely received and/or completely rendered second page. Thus, a first page in transaction state may indicate that the requested second page was received and rendered completely and will be presented automatically after a predefined time period has lapsed or after a user has manually confirmed the replacement of the first page by the second page. This may be advantageous because the user may be notified that the second page is available for display or will be automatically displayed shortly. Thus, the user is informed that the currently displayed first page might be replaced soon and that relevant data displayed as part of the first page should be memorized or noted down.

According to embodiments, the mobile telecommunication device emits, upon in case b) determining that the second page is received and rendered completely, a visual and/or acoustic notification that the second page is ready for display. The notification may be, for example, a banner or another kind of pane presented as an overlay layer to the first page. It may be an acoustic signal or a highlighted border of the first page or an intermediate page. The intermediate page may have a completely different content as the first page, e.g. content related to advertisement, or may be a derivative version of the first page, e.g. the first page having a particular state and/or comprising a set of UI elements and functions that deviates at least in part from the UI elements ("user interface elements") of the first page in reading state.

Alternatively, the mobile telecommunication device in case b) emits at a predefined second time period before the second page is predicted to be received and rendered completely a visual and/or acoustic notification. For example, said second time period may be about 5 seconds before the second page is predicted to be received and rendered. The notification indicates that the second page is ready for display. This may accelerate the displaying of the second page because usually a user requires a minimum amount of time ("reaction time") in order to recognize the notification and its meaning and take appropriate action. By notifying the user that the page was loaded successfully in advance for the "reaction time", the delay caused by the reaction time of the user may be reduced or avoided.

According to embodiments the mobile telecommunication device for case b) displays a GUI element as part of the first page when the first page has transacting state. The GUI element enables a user to submit a termination request. The GUI element is absent from the first page in reading state. The telecommunication device evaluates if the state of the first page has been set to transacting state for longer than a predefined third time period without detecting a termination request. If the state of the first page has been set to transacting state for longer than the third time period without detecting a termination request, the mobile telecommunication device automatically displays the second page, thereby replacing the first page on the display. The third time period may be, for example, two seconds. Said feature may allow for a smooth and fully automated navigation through a plurality of different pages. This may be particularly advantageous e.g. for displaying complex slide shows or image galleries via a network. For each page, it may be automatically determined how long its respective loading and/or rendering time will be, and the rendering and display approach may be automatically selected accordingly. If the user does not actively terminate the display of a loaded page, it will be displayed automatically. Thus, even if an image gallery or a slide show comprises pages of very different sizes, each page may be presented either quickly according to option a) or at least may be presented automatically upon having been loaded and rendered completely according to b), irrespective of whether the loading and rendering of a page may take 5 seconds or 50 seconds. Enabling the user to submit a termination request may allow a user to request a second page to be loaded and rendered in the background already at a moment when he or she may not have fully read the first page and/or may not be sure if the second page really is of interest. In case during the reading of the first page the user determines that the second page is not of interest, the user may simply prohibit the displaying of the loaded and rendered page by submitting the termination request.

According to embodiments the mobile telecommunication device displays a repeatedly updated visual indicator on the display of the mobile telecommunication device, wherein the visual indicator disappears in proportion to the expiration of the third time period. This indicator may be, for example, a bar that becomes shorter during expiration of the third time period. Thus the user is always informed about the remaining time until the first page will automatically switch to the second page during which the user may submit a termination request.

According to embodiments the second page of digital content includes one or more images and other content. In case of a), the mobile telecommunication device performs the immediate rendering and displaying of the parts in accordance with the sequentially received parts of the second page and irrespective of whether said parts comprise the one or more images or the other content. For example, the other content could be text content specified e.g. as HTML or other markup language text tor any other data type that can be rendered significantly faster than images, e.g. at least 10 times faster than a comparable amount of image data. In case b) the mobile telecommunication device sets the status of the first page to transacting state when the other content has been received and rendered completely irrespective of whether the images have also been received and rendered completely. The mobile telecommunication device aborts the delaying of the displaying of the second page when the mobile telecommunication device has received and rendered the other content completely irrespective of the one or more images. The mobile telecommunication device performs the displaying of the second page immediately after the mobile telecommunication device having rendered the other content completely, wherein the second page comprises at least the rendered other content. This may be advantageous, in particular in the context of navigating between fact oriented HTML web pages, because usually the most important part of the data is received by the telecommunication device as text data that can be rendered comparatively quickly. The images may merely fulfill explanatory or illustrative purposes. Thus, the user may very quickly navigate between pages. The user may not have to wait until also the images at the lower parts of the page are rendered until he or she may see the text sections at the lower parts of a page.

According to some embodiments, the one or more images may be rendered and displayed partially and sequentially in the background after displaying the other content as the requested second page on the display. Thus, according to embodiments, a second page comprising text and images is considered by the mobile telecommunication device as "received and rendered completely" when at least the non-image data components, in particular text components, are received and rendered completely.

According to embodiments the method for case b) further comprises: the mobile telecommunication device modifies the first page to include a repeatedly updated status indicator, e.g. a kind of "progress bar", to illustrate the progress of receiving and/or rendering of the second page by the mobile telecommunication device. This may allow a user to decide, on a per-page basis, if the requested second page is relevant enough to await the predicted loading and/or rendering time.

According to some embodiments, the requested second page may already have been stored locally, e.g. by means of a cache of the mobile telecommunication device. Instead of receiving the second page via the network a second time, the mobile telecommunication device may use the cached copy of the second page and thus does not need to retrieve the second page from the sender device a second time. In this case, the rendering time of a page may take longer than the receiving time. In this or other embodiments, it may be the case that the network connection is very good but the rendering is highly complex. Also in this case the rendering may require a significant portion of time necessary for preparing a page for display. In some cases, the rendering time may even take longer than the time for receiving the page via a network. In this instance, the majority of the processing time for the requested second page may come from rendering the second page for display. Depending on the embodiment, only the time required for receiving the second page via the network or only the time for rendering the second page may be predicted and used for using either the sub-method a) or sub-method b) for displaying the second page. In other embodiments, both the receiving time ("load time") and the rendering time are predicted and the sum of both times may be compared against the predefined first time period.

According to embodiments the mobile telecommunication device in case b) replaces the first page by an intermediate page while the second page is being received and/or rendered. The mobile telecommunication device uses the intermediate page as a new first page, the new first page having its state set to retiring state. According to some embodiments, the intermediate page comprises a sub-set of the UI-elements contained in the original first page. For example, said sub-set may have been freed of any selectable UI elements. Alternatively, the intermediate page comprises one or more or even all of the UI-elements contained in the original first page, whereby at least some of said UI elements were selectable in the original first page but are displayed as not selectable UI elements in the intermediate page. Alternatively, the intermediate page comprises an advertisement or a status bar that indicates the progress of the receiving and/or rendering of the second page. The status bar may be presented, for example, below the address bar of the web browser if the page is an HTML page.

In a further aspect, the invention relates to a non-transitory computer readable storage medium storing one or more programs. The one or more programs comprise instructions which, when executed by a processor, cause the processor to execute a method of any one of the above described embodiments.

In a further aspect, the invention relates to a mobile telecommunication device being connectable to a sender device via a network connection of a digital cellular wireless telecommunication network. The mobile telecommunication device is battery-powered and comprises a processor and a display and memory storing instructions. The instructions are executable by a processor and implement a method comprising:
- receiving a first page of digital content from the sender device via the network connection;
- displaying the first page on the display;
- sending a request for a second page of digital content to the sender device, the digital content of the second page being sequentially receivable via the network in parts, the sequentially received parts being renderable by the mobile telecommunication device before the second page is received completely;
- predicting, alone or in interoperation with the sender device, if a time period required for completely receiving the second page via the network connection and for rendering the second page of digital content is greater than a predefined first time period; and
- in case a) the required time period is predicted not to be greater than the first time period, the mobile telecommunication device immediately rendering and displaying the sequentially received parts on the display before the second page was received completely;
- in case b) the required time period is predicted to be greater than the first time period:
   o the mobile telecommunication device receiving the second page in the background and delaying the rendering and displaying of the second page at least until the second page is received completely; and
   o after having received the second page completely, the mobile telecommunication device rendering the received second page and displaying the second page on the display.

In a further aspect, the invention relates to a sender device. The sender device is connectable to a mobile telecommunication device via a network connection of a digital cellular wireless telecommunication network. The sender device comprises a processor and memory storing instructions configured for:
- generating the first page of digital content;
- transmitting the first page via the network connection to the mobile telecommunication device;
- receiving a request for a second page of digital content from the mobile telecommunication device;

- generating and sending the second page to the mobile telecommunication device via the network connection in response to receiving the request;
- predicting, alone or in interoperation with the mobile telecommunication device, a first time period required for transmitting the second page via the network connection to the mobile telecommunication device completely and/or predicting, alone or in interoperation with the mobile telecommunication device a second time period for rendering the second page of digital content; and
- sending the predicted first and/or second time periods to the mobile telecommunication device for enabling the mobile telecommunication device to predict if a time period required for completely receiving the second page via the network connection and for rendering the second page of digital content is greater than a predefined first time period.

In a further aspect, the invention relates to a telecommunication system comprising one or more mobile telecommunication devices and a sender device according to any one of the embodiments described herein.

A "telecommunication network" is a collection of terminals, devices, and processors which connect together so that communications can be made. A "digital cellular wireless telecommunication network" is a telecommunication network that provides services by using a large number of base stations, each covering only a limited area. It may allow a number of mobile telecommunication devices to communicate with each other and with other devices anywhere in the network. For example, the cellular network may use Global Systems for Mobile Communication (GSM), Code Division Multiple Access (CDMA) or other technologies.

A "telecommunication device" as used herein is a device that is able to transmit telephonic, electronic, digital, cellular, or radio communications via a network to another device. A telecommunication device may be, for example and without limitation, a mobile phone, in particular a smart phone, a tabloid computer, or the like.

A "sender device" is a telecommunication device capable of generating and sending content pages via a network to another telecommunication device.

A "data page" also referred herein as "page" or "content oriented page", is a set of data that comprises instructions and/or data that allow a processor to render and display information contained in said data on a display of a data processing device. A data page can be, for example, an electronic document, e.g. an XML file or plain text file generated by a content oriented application or a web page that belongs to a web site. It may be an individual slide of an electronic slide show document, an image of an electronic image library, a UI window generated by a web application and the like.

The term "rendering" refers to a type of data processing that is typically computationally expensive and that is used for transforming some source data into data that can easily presented to a user on a display. The source data may, for example, relate to vector graphic instructions that are transformed to pixel data during the rendering, some source video files to be rendered into a movie file, or some complex markup language documents that are transformed for generating colored, animated or otherwise highlighted text.

A "reading state" as used herein is a possible state of a page. A page in reading state is a page whose default set of UI elements is displayed without restriction and whose default interactive functions are enabled without restriction. Thus, a page being displayed in its reading state could also be referred to as a page being displayed with its "default" UI elements and functionality.

A "retiring state" as used herein is another possible state of a page. A first page in retiring state is a page that will at a future moment in time automatically or semiautomatically be replaced by a requested other page that is currently received and/or rendered. When said other ("second") page was completely received and rendered, said other page is ready for display. When the requested second page is ready for display, the state of the currently displayed page ("first page") may automatically change from "retiring state" to "transacting state". Thus, an event of the telecommunication device requesting the second page may automatically cause a change in the state of a currently displayed first page from "reading state" to "retiring state".

A "transacting state" as used herein is another possible state of a page. A page in transacting state is ready for being replaced by another (2second") page that was requested previously and that was meanwhile received and rendered completely. A page having transacting state may comprise an element for visually or acoustically notifying a user that the next page is ready for display. Thus, a change in a state of the second page from "partially loaded or rendered" to "completely loaded and rendered" may automatically cause a change in the state of a currently displayed first page from "retiring state" to "transacting state". A "page being ready for being replaced by another page" implies that the other (second) page was completely received and rendered and thus is available for immediate display once a user confirms that the first page should indeed be replaced by the requested second or upon a predefined time period lapsed after the first page was set to transacting state.

The parts of the digital content of the second page being sequentially receivable may be any kind of portions of the digital content used to transmit the second page via a network to the mobile telecommunication system. For example, the parts may be TCP/ip packages or data packages of a higher level of the OSI model. The units used for rendering may be higher-level data parts, e.g. elements of an HTML or XML file. A step of "immediately rendering and displaying the sequentially received parts on the display before the second page was received completely" may comprise, for example, rendering the received page from top to bottom and immediately refreshing the page. Thus, the user may, for example, see an image of a page that slowly "grows" from the top to the bottom of the display. The lower parts of the display may show a plain background without any data content that may be of interest for the user.

In a further aspect, the invention relates to a method that includes presenting, on a display, a first page of digital content having a state set to a reading state, receiving a request for a second page of digital content, setting the state of the first page of digital content to a retiring state based on the request, receiving the second page of digital content, determining that the second page of digital content is ready for presentation, and presenting, on the display, the second page of digital content based on the determination, wherein a navigational link on the first page of digital content is enabled when the state is set to the reading state, and wherein the navigational link on the first page of digital content is disabled when the state is set to the retiring state.

In one embodiment, the state of the first page is set to the retiring state when it is determined that the load time for the second page of digital content is greater than a predefined period of time. [0003] In another embodiment, the method further includes presenting, on the display, an advertisement when the state of the first page of digital content is set to the retiring state. [0004] In another embodiment, presenting the second page of digital content includes setting the state of the first page to a transacting state, wherein the first page of digital content is modified to include a visual notification that the second page is ready for presentation when the state of the first page is set to the transacting state, determining that the state of the first page has been set to the transacting state for a predefined period of time without detecting a termination request, and swapping the first page of digital content with the second page of digital content based on the determination.

In another embodiment, the visual indicator disappears in proportion to the expiration of the predefined period of time. [0006] In another embodiment, the second page of digital content includes content and images, wherein the second page is ready for presentation when the content has been received irrespective of the images.

### Brief description of the drawings

In the following embodiments of the invention are explained in greater detail, by way of example only, making reference to the drawings in which:
- FIG. 1: illustrates an exemplary telecommunication system.
- FIG. 2: illustrates an exemplary processor for displaying a data page.
- FIG. 3: illustrates an exemplary method to navigate between data pages.
- FIG. 4: illustrates an exemplary method to transition to a next data page.
- FIG. 5: illustrates another exemplary method to navigate between data pages.
- FIG. 6: illustrates an example of a web browser displaying a data page in the reading state.
- FIG. 7: illustrates an example of a web browser displaying a data page in the transacting state.
- FIG. 8: illustrates another example of a web browser displaying a data page in the transacting state.
- FIG. 9: illustrates an example of a web browser displaying the next data page after the termination period has expired.
- FIG. 10: illustrates an exemplary telecommunication system.
- Fig. 11: is a flow chart of loading, rendering and displaying a second page.

### Detailed description

Described herein are techniques for providing smooth navigation between data pages in a telecommunication network that may reduce CPU consumption and that flexibly adapt to different page loading times and/or page rendering times. In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

A telecommunication system and method is described for providing smooth and resource saving navigation between data pages.

Data pages can include pages of content that are presented from a content oriented application. For example, an eBook reader, an electronic catalog, and a database application are considered content oriented applications. Data pages can also include data pages that are presented through a web browser. For example, a web page from a web site is considered a data page. A data page may also consist of a single file, e.g. a single picture that may be part of an image gallery, or may consist of an individual slide of a slide show.

The system includes one or more mobile telecommunication devices, e.g. computing devices such as smartphones, notebooks, tabloid computers or the like that are configured to present content to the user in the form of pages. Data pages can be presented on a display one page at a time. While a current page, also referred herein as "first page" is being displayed, a request for a next data page, also referred herein as "second page", can be received from a remote device or from local memory. In situations where the loading and rendering of the requested next page is predicted to be short, parts of the content of the requested second page may sequentially be received, rendered and displayed. In situations where the loading and/or rendering are predicted to take longer than desired or acceptable, a "smooth navigation technique" can be applied to increase the efficiency of the rendering process and to avoid situations wherein the user sees neither the content of the old page nor the content of the new page. The smooth navigation technique can include presenting an intermediate page while the next page is being received and rendered in the background. The rendering and displaying of the received parts of the second page is delayed at least until the requested second page was received by the mobile telecommunication device for reducing the computational overhead produced by idle rendering routines and for "smoothing" the navigation between pages of the user.

The intermediate page can be the first page with a reduced number of UI elements.

In addition or alternatively, said UI elements have restricted functionality. Alternatively, the intermediate page may be an advertisement. The intermediate page can be presented for the duration of time that the next page is being received and/or rendered.

Once the next page is ready for presentation, a notification can be presented on the intermediate page to inform the user that unless otherwise instructed within a predefined period of time, the next data page shall be presented. If an instruction is received to cancel the next page, a so called "termination request", the current page can be presented again. By utilizing smooth navigation techniques, a user can view, scan, or check out other content or advertisements while the next page is being received and rendered. This creates a more desirable user experience when navigating through data pages. By delaying the rendering until the requested page was received completely, computational resources of the mobile telecommunication device may be saved.

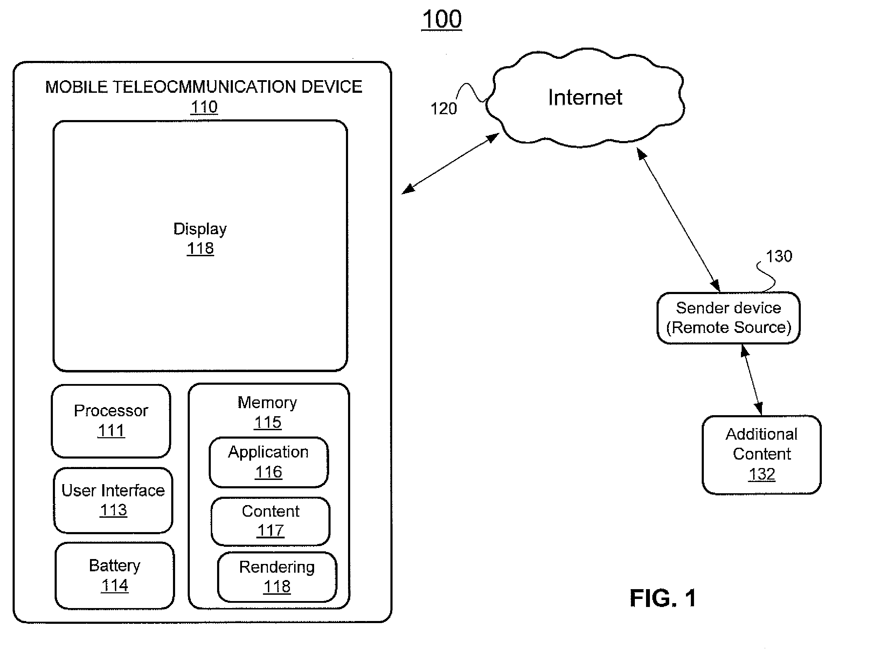

**FIG. 1** illustrates an exemplary high level diagram of a networked telecommunication system 100. System 100 includes a mobile telecommunication device 110 that includes a processor 111, a user interface 113, memory 115, and a display 118. Processor 111 can be configured to execute application module 116 stored in memory 115. As the application is being executed, display 118 can provide an output interface for the application while user interface 113 can provide an input interface for the application. The mobile telecommunication device is assigned to a user and is coupled via a network 120, e.g. the Internet, to a sender device 130. The sender device may be, a server hosting a web-application. The sender device may be part of the telecommunication system. In some examples, the user interface can include a touchpad, a keyboard, a microphone, or a camera. In other examples, the display is a touch sensitive display that may supplement or replace user interface 113.

Memory 115 also stores content module 117. Content module 117 includes many data pages that are processed and rendered by processor 111 for presentation on display 118. The content module may act as a cache for already received and rendered pages. In case a page is requested that was already loaded and rendered previously and that is still stored in the content module, said page is used and displayed instead of requesting the next page via the network.

In one embodiment, application 116 running on processor 111 can receive a user request for a data page stored in content module 117. In some examples, the user request can be received by clicking a navigational link on a data page, specifying a chapter or page to navigate to, or entering a search parameter. Application 116 can process the user request and determine whether the requested page can be received and/or rendered within a predefined first time period. If this is the case (option a)), the received parts of the second page are rendered and displayed immediately, even in case the whole page content should not have been received yet. If the processing time of the requested page (which can include loading the page and/or rendering the page) is greater than the predefined first time period (case b)), the first page with another state or an intermediate page may be displayed and the displaying of the second page may be delayed until the second page was rendered completely. Said approach according to b) may also be referred to as "smooth navigation technique". Exemplary smooth navigational techniques are described in further detail below.

In another embodiment, a user request can be for a data page that is not stored locally. Here, a telecommunication network 120, e.g. the internet, connects a sender device 130, also referred to as "remote source" 130 that includes additional content 132, to the mobile telecommunication network. Application 116 running on processor 111 can request a data page from additional content 132 in response to a user input received from user interface 113. For example, a website can be hosted at the sender device 130. A user browsing a web page ("first page") belonging to the website can click on a navigational link to request another page (i.e., the "next page" or "second page") from the website. Processor 111 can process the request by transmitting a page request to sender device 130 via internet 120. The page request can be processed by the sender device 130 and an estimated load time can be transmitted to the mobile telecommunication device 110. Alternatively, the load time (i.e., the time for receiving the requested second page by the telecommunication device via the network) is predicted by the mobile telecommunication device alone or in interoperation with the sender device. For example, the mobile telecommunication device may evaluate the network bandwidth, apply heuristics calculations or send a request for receiving a small test page. Based on the estimated load time, application 116 can make a determination of whether the requested page should be rendered immediately and continuously while it is loaded (a)) or if smooth navigation techniques should be applied (option b)). Generally if the load time is greater than a predefined first time period, the rendering of the new page may be delayed to improve the user experience and reduce CPU and battery consumption. If the load time is less than the predefined value, application 116 waits to receive and present the data page from sender device 130.

In some embodiments, the mobile telecommunication device once having determined that a smooth navigation technique of sub-method b) shall be applied may select one out of a plurality of different variants of sub-method b). For example, delaying the displaying of the requested next page according to sub-method b) may involve displaying an intermediate page that comprises advertisement and that differ significantly from the first page. Alternatively, the intermediate page may be almost identical to the currently displayed "old" page except that some selectable UI elements may be deactivated to prevent that a user erroneously selects said UI element while the second page is loading.

For example, application 116 can determine whether to display to a requested second data page via sub-method a) or sub-method b) in dependence on a predicted loading and/or rendering time of said second page. Based on the determination, application 116 can set a state field of the first data page. Processor 111 processes the first data page currently displayed on display 118.

Depending on the state of the page, the processor 111 may control the generation and display of different kinds of UI elements of the first page and may cause the displaying of an intermediate page.

Via processor 111, a central control application interoperably coupled to a central rendering application 118 may control if a requested page should be displayed via sub-method a) or sub-method b) for multiple different applications 116 having been installed on the mobile telecommunication device. Alternatively, each of said applications 116 may have individual control on the displaying of newly requested pages.

Accordingly, a single central control application of the mobile telecommunication device can be configured to set the state and also define the actions that are to take place based on the state for multiple applications 116 respectively supporting page-based navigation of content pages received from remote sources. In other examples, the state of the currently displayed page is controlled by the respective application 116 directly.

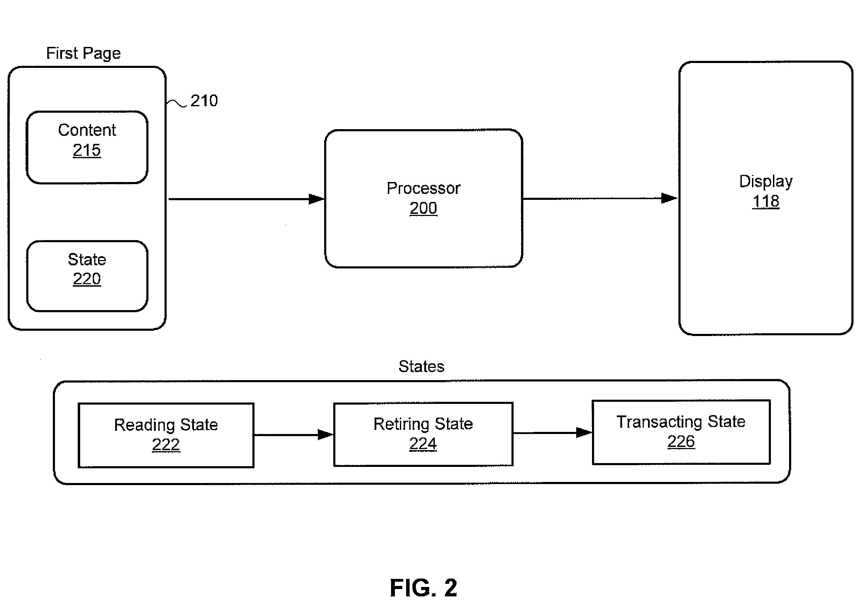

**FIG. 2** illustrates different states of a currently displayed data page 210, also referred herein as "first page", and illustrates the impact of the state of the first page 210 on the rendering of its content. As shown, processor 200 receives and processes the first page 210 for presentation on display 118 of a mobile telecommunication device as depicted for example in Fig. 1. Processing can include the rendering of content 215 of the first page 210 for display on display 118 based on the current state 220 of said page. Content 215 can include text, images, videos, navigational links, selectable buttons, movable page elements, compositional metadata, and others.

When state 220 is in reading state 222, the first page 210 can be displayed without any restrictions. In other words, the first page 210 can be presented on display 118 with all its intended content. Said content could also be referred to as the "default UI element set of the first page". This can include the presentation of interactive features such as forward button, back button, and navigational links that are operational. In the example of a web page, the web page can be displayed as the author intended, thus including all the text, images, navigational links, and other interactive features. In some examples, the reading state can be the default state for a page.

When state 220 is in retiring state 224, an intermediate page can be presented in place of the default content 215 displayed in "reading state". The intermediate page can be configured to provide a data page for viewing while the next page requested (the "second page") is being downloaded and rendered.

For example, the mobile telecommunication device may receive a request to navigate to another page, e.g. when a user selects a link to a particular URL via a button being part of the first page. The mobile telecommunication device may predict the loading and/or rendering time require for the requested "second" page. The device may determine that the predicted loading and rendering time may exceed a predefined maximum first time period and automatically select sub-method b) for rendering and displaying the requested second page: instead of presenting a partially rendered page as the requested page is being processed (sub-method a)), an intermediate page is presented to the user and the requested second page is received in the background. The intermediate page may comprise content that a user can glance over while waiting for the requested second page, thus creating a more user-friendly environment.

In one embodiment, the intermediate page can simply be a version of the currently displayed first page:
The version can be the current first page with limited features. In one version, processor 200 can render interactive features such as text boxes, navigational links (forward and back buttons) and address bars so that they are viewable by not selectable. This allows the current page to maintain the same appearance as before thus not interrupting the user's view. The user may still be able to scroll and navigate around the currently displayed first page. However, other interactions with the page are restricted. For instance, attempting to navigate away from the intermediate page can be restricted, e.g. by displaying UI elements that are identical or similar to the UI elements of the first page but which are rendered such that they are not selectable by the user any more. In another example, the current page can be presented without displaying the interactive features. For instance, processor 200 can skip rendering of the interactive features.

The version can also be the currently displayed first page with additional features and UI elements. For example, a status bar can overlay a portion of the currently displayed first page to notify the user when the requested second page will be displayed. In the case of a web page, the status bar can appear at a part of the currently displayed first page that is below the address bar of the web browser.

In another embodiment, the intermediate page can be a page comprising a completely other content than the currently displayed first page. For example, the intermediate page can be an advertisement that is presented to the user for the duration of time that the requested page is being processed. The advertisement can be retrieved locally or from a remote location and can be determined by a server 130 of the host (or author) of the requested second page or by the application 116 running on the client device. In some examples, a status bar can be presented on the intermediate page (the modified version of the first page, the advertisement page, or other) to inform the user approximately when the requested page will be ready.

The application 116 controlling the displaying of the intermediate page can also be configured to receive a termination request. If a termination request is received during presentation of the intermediate page, the original version of the first page can be displayed once again. The termination request can be triggered through the user interface of the computing device. Examples can include a double mouse click, a swipe gesture, a touch gesture, or other.

In one example, tapping another navigational link presented in the intermediate page may result in two actions: to the first, a termination request to cancel the current transaction (i.e., cancel the current request to load, render and display the second page and cancel the displaying of the intermediate page); and to the second, a page request for the page associated with the navigational link which is referred herein as "third page". Thus, the mobile telecommunication device may quit loading of the second page and start loading of the third page instead. The mobile telecommunication device may predict the time necessary for receiving and/or rendering the third page. If said predicted time exceeds a predefined maximum first time period, the third page will be loaded and displayed via sub-method a) and the first page remains in a retired state while the requested page has changed from the second page to the third page associated with the selected navigational link.

When state 220 is in transacting state 226, a notification can be presented to the user that the requested second (or third) page is ready for display. In one embodiment, a fly in, banner, or other indicator (visual or audio) can be presented to the user to notify the user that the requested second page will be presented shortly. In one example, a highlighted border can be added to the intermediate page. In another example where a status bar is presented on the intermediate page during the processing of the requested page, a full status bar can be presented on the intermediate page when the intermediate page is in the transacting state.

In one embodiment, the notification can be displayed for a predefined second time period, e.g. about 5 seconds, before the requested page is predicted to be displayed. This may accelerate the displaying. The second time period may correspond to a typical reaction time of a user. The user may have to press an additional UI element in order to confirm that the completely rendered second page should actually be displayed. By presenting the notification prior to the actual finishing of the second page, the user, after the reaction time has lapsed, may confirm the display of the second page right after said second page was in fact finalized. Thus, the time for presenting second pages after a user confirmation may be reduced.

According to some embodiments, the second page is displayed automatically after a predefined delay period after it has been rendered completely. When the first page changes its state to transacting state, a determination can be made as to whether user input has been detected to terminate the presentation of the requested page during a predefined third time period (the "delay") since the first page being in transacting state. For instance, a user can desire to spend more time on the currently displayed intermediate page. If user input has been detected to terminate the presentation of the requested page, processor 200 can present the original version of the first page. The user input to cancel the requested page can include a tapping, swiping, or clicking action during the predefined period of time.

In one embodiment, the notification can be presented prior to the requested second page being ready for presentation, and also the predefined third time period may be calculated starting from this moment rather than starting from the first page being set to transacting state. This can shorten the time it takes to present the requested second page. For instance if the notification is to be displayed for five seconds before presentation of the requested second page, the notification can be presented five seconds before the requested second page is predicted to have been loaded and rendered completely. Thus, the requested second page can be finalized while the notification is being presented on the intermediate page. This can reduce the delay between requesting a second page and presentation of said second page.

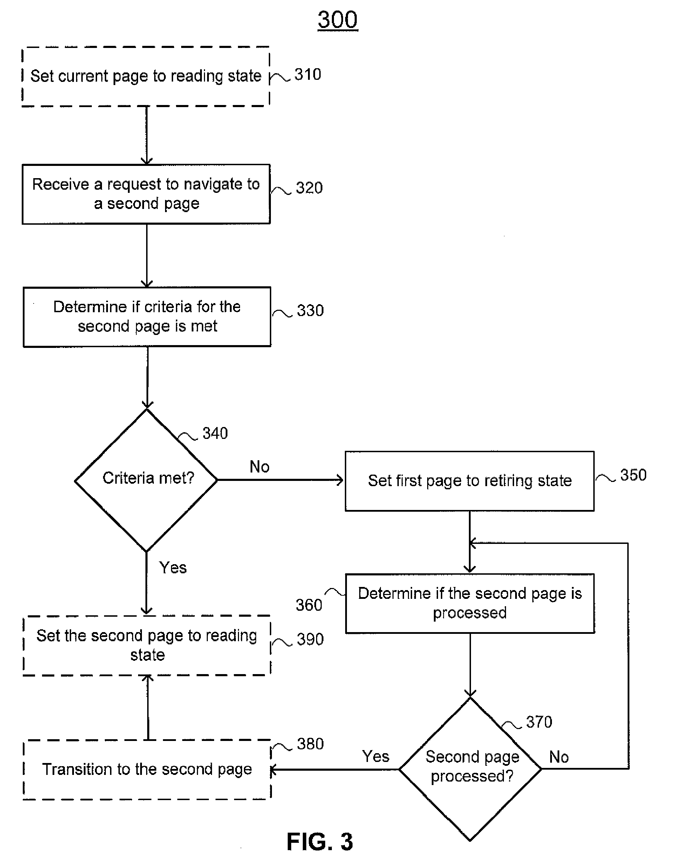

Fig. 3 illustrates an exemplary method to smoothly and efficiently navigate between pages. Process 300 can be performed by a processor 111 of a mobile telecommunication device 110 as described in FIG. 1. In one example, process 300 can be stored in memory 115, possibly as part of application 116 of FIG. 1. Process 300 describes one example of how a state of a currently displayed page ("first page") can change as the user navigates to a next page ("second page"). Process 300 can begin by explicitly setting the state of the currently displayed first page to reading state at 310. Alternatively, the state of all pages displayed on the device 110 the first time can by default be set to reading state. Process 300 can receive a request to navigate to a second page at 320. For example, the user of the device 110 may have selected a link presented on the first page. Once the request has been received, parts of the second page are received sequentially from a sender device via a network connection. The device 110 predicts when the second page will be received from the sender device and/or will be rendered completely. If it is predicted that the receiving and/or rendering of the second page will take longer than a predefined first time period, the second page is received and rendered in the background and the displaying of the second page is delayed at least until the second page is received completely according to sub-method b).

After the loading of the second page was initiated in accordance with sub-method b), process 300 could set the first page to retiring state and could then repeatedly determine 340 if criteria for displaying the second page have been met at 330. For example, a first criterion could be met if the device 110 determines that the second page was received completely from the sender device. As a consequence, the device could trigger the rendering of the page, e.g. by starting a rendering application. A second criterion could be if at least the text fraction of the second page were loaded and rendered completely while the images of the second page are still loading and/or rendering. In this case, the device could trigger the displaying of the text fraction of the second page as the second page. Said second page could then be sequentially filled with the rendered images. A third criterion could be if the whole content of the second page was loaded and rendered completely. In this case, the device could set trigger the displaying of the completely received and rendered second page on the display 118.

Thus, if the criteria are met at 340, i.e., if the second page was received and rendered completely, then the requested second page is presented and the state of the second page can optionally be set to the reading state at 390.

Alternatively if the criteria are not met at 340, process 300 can continue by setting or maintaining the state of the currently displayed first page to a retiring state at 350. Various different exemplary implementations are described herein for executing sub-method b) for providing a smooth and power-saving navigation method.

Process 300 further comprises a step 360 for determining if the second page was processed completely and successfully. Processing the next page can include receiving the contents of the next page, rendering the contents, and otherwise preparing the next page for presentation on the display. In one example, process 300 can wait for a trigger notifying it that the second page has been processed. In another example, process 300 can periodically check to see whether the second page has been processed. Once the next page has been processed at 370, process 300 can optionally transition to displaying the second page at 380 on the display, thereby replacing the currently displayed first page. Optionally, the second page can be set to the reading state at 390.

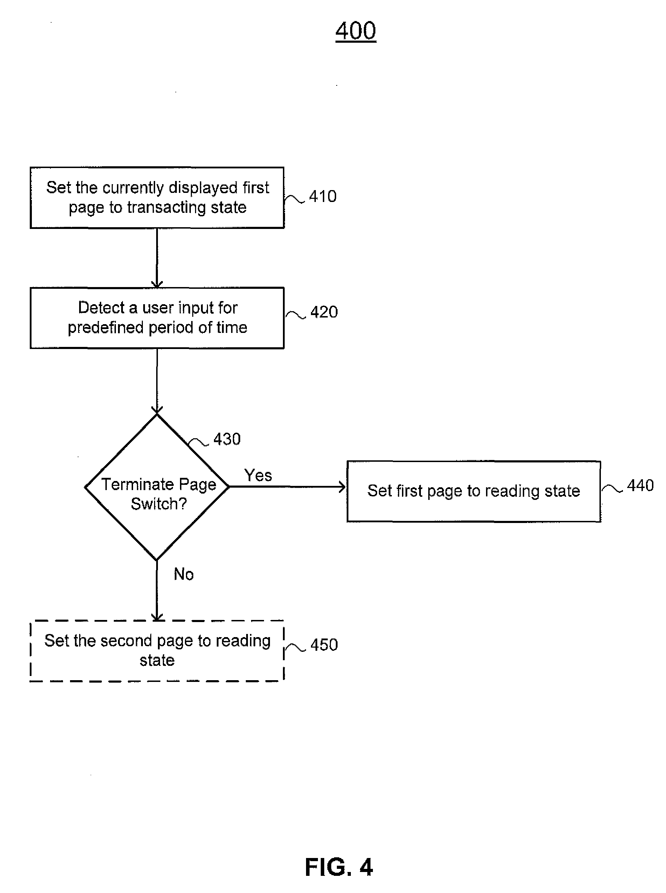

**FIG. 4** illustrates an exemplary method to navigating from a first to a second data page. Process 400 can be performed by a processor 111 of a mobile telecommunication device 110 as described in FIG. 1. In one example, process 400 can be stored in memory 115, possibly as part of application 116 of FIG. 1. Process 400 describes an exemplary implementation of replacing a first displayed page by a requested second page similar to 300 of FIG. 3. Process 400 begins by setting the state of the currently displayed first page to transacting state at 410. A page having transacting state can present a visual or audio notification that serves to indicate that the next page is ready. In one example, the notification can be an audible tone or series of tones. In another example, the notification can be a status bar positioned below the address bar of the web browser that is full. In yet another example, the intermediate page can be highlighted with a border to signify that the second page was completely received and rendered and is ready for display.

Once the first page has been set to the transacting state, process 400 continues by awaiting a termination request submitted by a user for a predefined third time period at 420. For example, after the first page enters the transacting state, a timer can begin. Said predefined third time period enables the user to terminate the request to display the requested second page within said predefined third time period. If during the predefined third time period a termination request is detected at 430, presentation of the first page can resume and the state of the currently displayed first page can be set to the reading state at 440. Alternatively if during the predefined third time period a termination request is not detected, presentation of the requested second page can begin and the state of the second page can optionally be set to the reading state at 450. Depending on the implementation details, the termination request can be a double click of the mouse, a swipe gesture, or a tap gesture. In some examples, the termination request can also be a page request for another (a "third") page. For instance, a tap gesture or clicking action on another navigational link while the displayed first page is in transacting state can be interpreted as a termination request in respect to the currently received or rendered second request followed by a next page request for a third page that is associated with the navigational link.

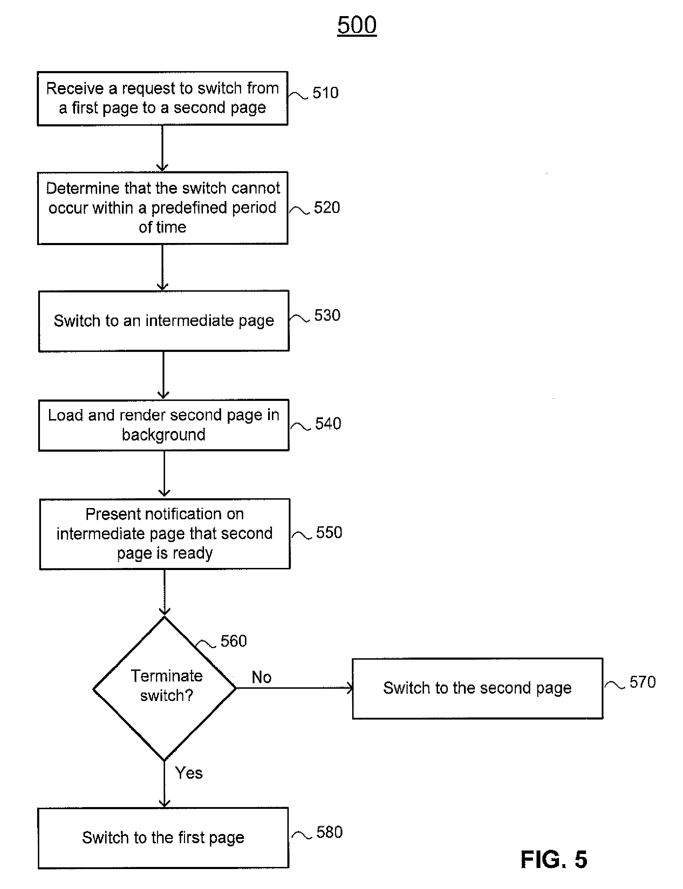

**FIG. 5** illustrates another exemplary method for efficiently and smoothly navigating between pages. Process 500 can be performed by a processor 111 mobile telecommunication device 110 as described in FIG. 1. In one example, process 500 can be stored in memory 115, possibly as part of application 116 of FIG. 1. Process 500 describes another example of a method for navigation between pages. The logic to determine when and how to perform the smooth navigation is included in the process. Process 500 begins by receiving a request to switch from a first page to a second page at 510. The request can be the selection of a navigational link, the selection of an entry of a URL or search term into an address bar, the manipulation of interactive elements on a web page, or other. Once the request is received, a determination is made that the switch cannot occur within a predefined period of time at 520. In some examples, the determination can include predicting the time needed to switch pages, which can include predicting the loading time, predicting the rendering time, and/or predicting the time for further required processing steps before the requested second page can be displayed.

Once it is determined that the switch cannot occur within the predefined period of time, the first page is switched for an intermediate page at 530. The intermediate page can take on various forms. In one example, the intermediate page can be an advertisement that is provided by the computing device. In another example, the intermediate page can be an advertisement that is provided by the sender device having generated and provided the second page. In yet another embodiment, a switch may not occur from the first page to the intermediate page. Instead, a different version of the first page is presented. The different version can include disabling interactive features, hiding interactive features, and/or adding in features that monitor the status of setting up the second page. For example, a status bar can be presented on the first page that indicates the progress of the loading and rendering of the second page. The intermediate page, e.g. a page comprising advertisement, can also be implemented as another form of the currently displayed first page, i.e., the first page having a particular state, e.g. retiring state or transacting state. Thus, some forms of the intermediate page may be very similar to the first page in reading state (and may simply comprise some more UI elements, some less UI elements or some modified UI elements, e.g. UI elements not being selectable any more). Other forms, like an advertisement, may not be similar. In any case, the intermediate page may technically be implemented as the first page having different states, wherein in the reading states the first page comprises its default set of UI elements, in the retiring state it will comprise a similar content (deactivated UI elements) or a completely different content (advertisement) and will indicate that the requested second page is not ready for display. The same holds true for the transacting state with the difference that in transacting state the user is notified that the second page is ready for display. The intermediate page may comprise content that is either relevant for the user or for the provider of the intermediate page.
After the intermediate page is shown, the second page can be loaded and then be rendered in the background at 540. [0034] Once the second page has been loaded and rendered, a notification can be presented on the intermediate page (that may be implemented as the first page having transacting state) indicating that the second page is ready for display at 550. In one example, the notification can include a border around the intermediate page (or version of the first page, depending on implementation). In another example, the notification can alternatively be a status bar that is full. The status bar, when full, can change to a different color. In yet another example, the notification can be an audible sound. Once the notification has been presented, process 500 can detect for a termination request for a predefined period of time at 560. A termination request can be an input received that is configured to terminate the switch to the second page. This can occur if the user no longer desires to switch from the first page to the second page. In one example, the termination request can be a tap gesture, swipe gesture, or click gesture performed on an interface device such as a mouse or a touch screen. If a request to terminate the switch is detected at 560, then process 500 switches to back to the first page at 580. This can be the original version of the first page having set its state to reading state. If the request to terminate the switch is not detected at 560 during the predefined period of time, process 500 switches to the second page at 570.

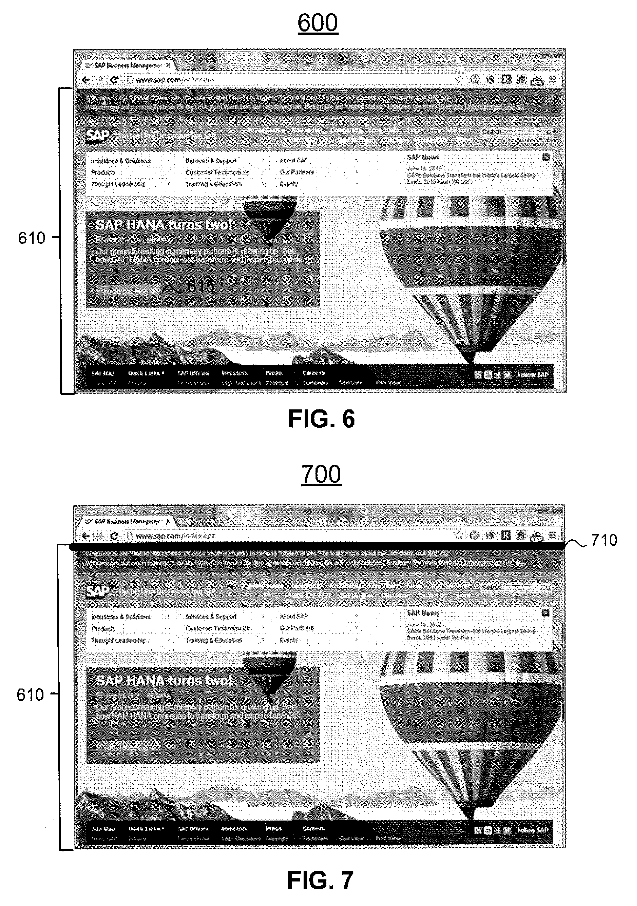

**FIG. 6 to 9** illustrate exemplary screen shots of a data page as the page is in different states. FIG. 6 illustrates an example of a web browser displaying a data page ("first page") in the reading state. As shown, page 610 is presented with text, images, and navigational links that are enabled. A user using a touch screen can select navigational link 615 to read the blog related to "SAP HANA turns twol" When selected, the first page can enter a retiring state. In the retiring state, the data page can appear the same as page 610. However, the navigational links may be disabled. Alternatively, an advertisement can be presented as a particular version of the first page or in place of the first page when the data page is in the retiring state.

**FIG. 7** illustrates an example of a web browser displaying a data page in the transacting state. As shown, a currently displayed first page 610 is still presented with the same text, images, and navigational links. However, the navigational links are disabled. Page 610 further includes status bar 710. Status bar 710 can be displayed to notify the user that the requested second page is ready for presentation. In one example, status bar 710 can become shorter as the predefined third time period for the user to terminate the switch to the next page expires. In one example, the status bar can become shorter in proportion to the expiration of the predefined third time period.

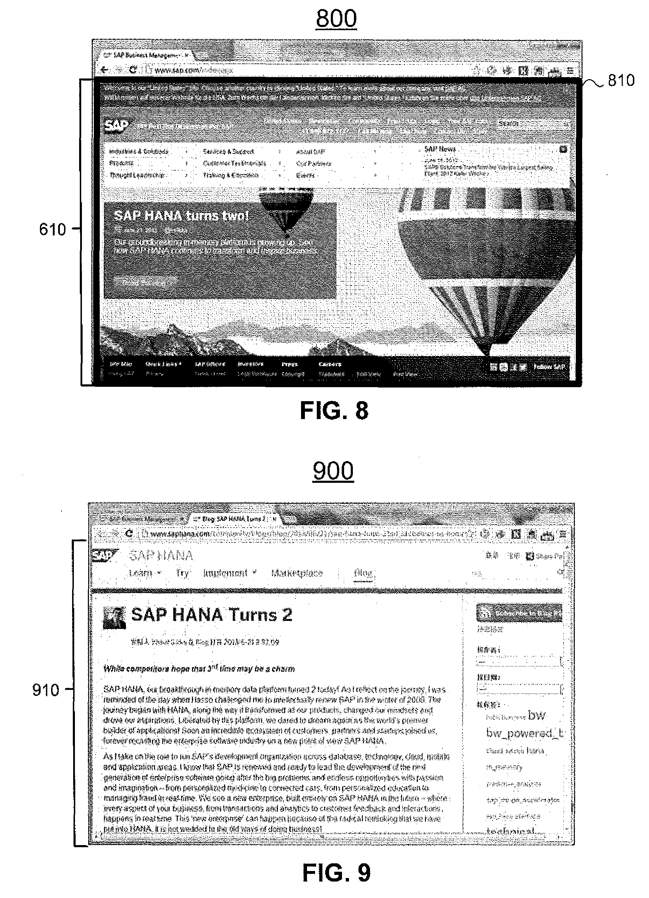

**FIG. 8** illustrates another example of a web browser displaying a first page in the transacting state. As shown in Fig. 8, a border 810 is displayed along the border of first page 610. In one example, the border can disappear as the third time period for the user to terminate the switch to the next page expires. The border can disappear in proportion to the expiration of the predefined period of time.

**FIG. 9** illustrates an example of a web browser displaying the requested second data page after the termination period has expired. As shown, the web browser is presenting second page 910, which includes text, images, and navigational links. The text and images are related to the topic "SAP HANA Turns 2."

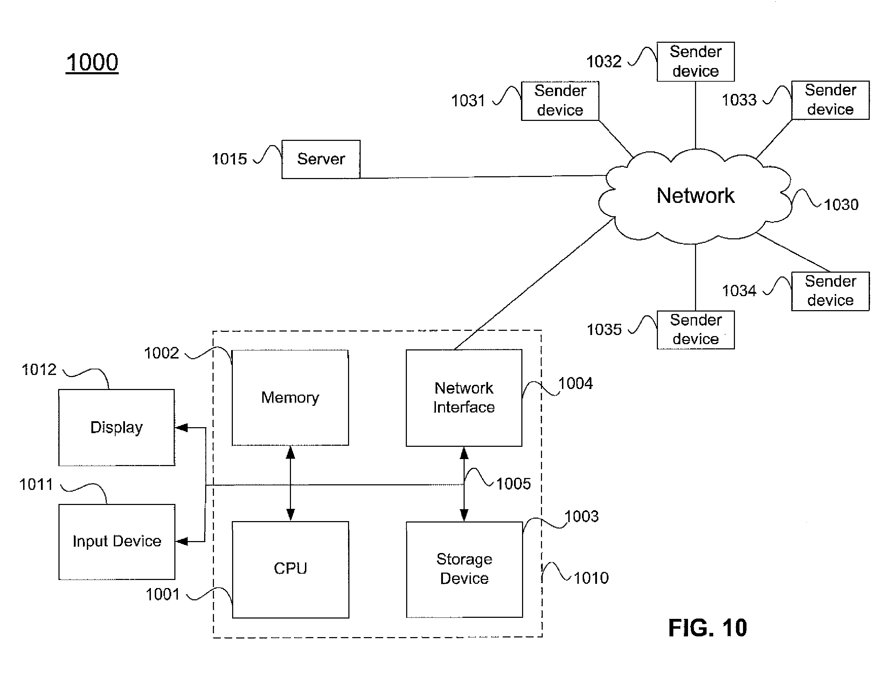

An exemplary mobile telecommunication device 1010 is illustrated in **FIG. 10****.** The mobile telecommunication device 1010 may be, for example, a smartphone or tabloid computer. It includes a bus 705 or other communication mechanism for communicating information, and a processor 1001 coupled with bus 1005 for processing information. Telecommunication device 1010 also includes a memory 1002 coupled to bus 1005 for storing information and instructions to be executed by processor 1001, including information and instructions for performing the techniques described above, for example. This memory may also be used for storing variables or other intermediate information during execution of instructions to be executed by processor 1001. Possible implementations of this memory may be, but are not limited to, random access memory (RAM), read only memory (ROM), or both. A storage device 1003 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 1003 may include source code, binary code, or software files for performing the techniques above, for example. Storage device and memory are both examples of computer readable mediums. The mobile telecommunication device 1010 may be coupled via bus 1005 to a display 1012, such as a liquid crystal display (LCD), for displaying information to a user of the telecommunication device. An input device 1011 such as a keyboard and/or touch screen is coupled to bus 1005 for communicating information and command selections from the user to processor 1001. The combination of these components allows the user to communicate with the telecommunication device. In some systems, bus 1005 may be divided into multiple specialized buses.

Telecommunication device 1010 also includes a network interface 1004 coupled with bus 1005. Network interface 1004 may provide two-way data communication between the device 1010 and a telecommunication network 1030. The network interface 1004 may be a wireless link or a mobile telephone network link. In any such implementation, network interface 1004 sends and receives electrical, electromagnetic, or optical signals that carry digital data streams representing various types of information.

Mobile telecommunication device 1010 can send and receive information, including messages or other interface actions, through the network interface 1004 across the network 1030. Telecommunication device 1010 may communicate with a plurality of other sender devices, such as sender device 1015. Each sender device may provide different kinds of data pages, e.g. in form of image galleries, interlinked HTML pages, slide show files provided via the network, and the like. A sender device 1031 may transmit actions or messages from one component, through the network 1030 and network interface 1004 to the mobile telecommunication device 1010.

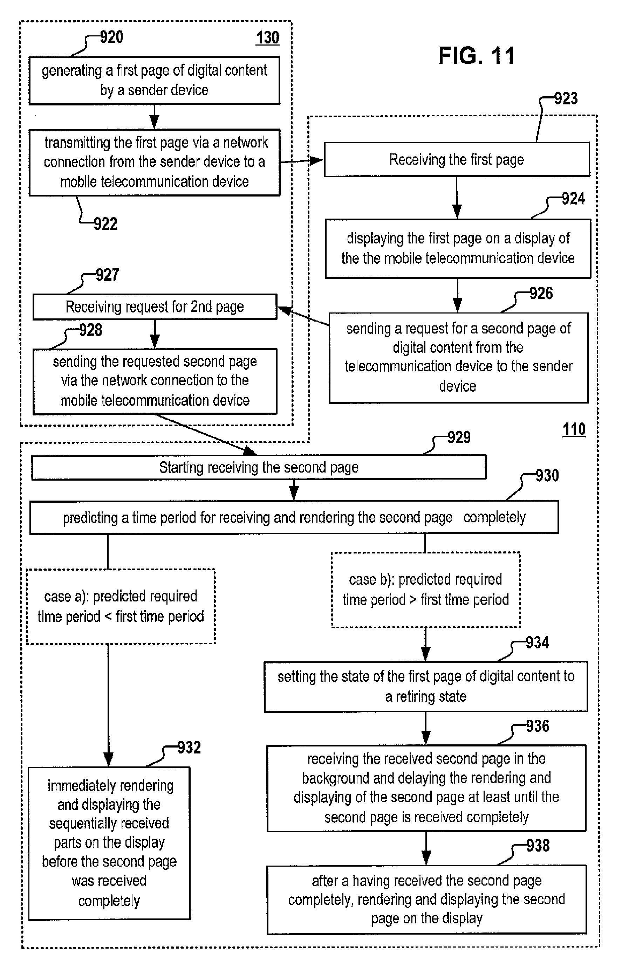

**Fig. 11** is a flow chart of loading, rendering and displaying a second page. A sender device 130, 1015, 1031-1035 as depicted, for example, in Fig. 1 or 10, generates a first page 210, 610, e.g. an HTML page comprising text and image data. The page is transmitted in step 922 to a mobile telecommunication device, e.g. a smartphone. In step 923, the smart phone receives the first page and displays the first page on its display in step 924. The user may click on a link or other UI element (user interface element) contained in the first page. As a result, the smartphone sends in step 926 a request to the sender device, e.g. a web server or application server hosted on a remote server computer. The request may be, for example, a HTTP GET or POST request, a web service request, or the like. In response to receiving the request in step 927, the sender device generates a second page and sends the second page in step 928 to the smartphone. The smartphone may start in step 929 to receive ("load") the requested second page and to predict in step 930 the time necessary for loading and rendering the second page right after having submitted the request. Alternatively, the sender device may have executed the prediction or the smartphone and the sender device exchange a test request response cycle for predicting the loading time of the requested second page. In case a) the required time period is predicted not to be greater than the first time period, the mobile telecommunication device, the smartphone immediately renders and displays the sequentially received parts on the display before the second page was received completely in step 932. In case b) the required time period is predicted to be greater than the first time period, the smartphone receives in step 936 the second page, renders the completely received second page in the background and delays the displaying of the second page at least until the second page is received and rendered completely; after having received the second page completely, the smartphone renders the second page in the background and displays 938 the second page on its display.

### List of reference numerals

- 100: telecommunication system
- 110: mobile telecommunication device
- 111: processor
- 113: user interface
- 114: battery
- 115: memory
- 116: application
- 117: content module
- 118: display
- 120: network
- 130: sender device
- 132: additional data content
- 200: processor
- 210: first page
- 220: current state of the first page
- 222: reading state
- 224: retiring state
- 226: transacting state
- 310-390: steps
- 410-450: steps
- 510-580: steps
- 610: first page
- 710: status bar
- 810: border
- 910: second page
- 1000: telecommunication system
- 1001: CPU
- 1002: memory
- 1003: storage device
- 1004: network interface
- 1010: mobile telecommunication device
- 1011: keyboard
- 1012: display
- 1015: sender device
- 1030: network
- 1031-1035: sender devices
- 920-238: steps

## Claims

1. A telecommunication method for communicating data pages via a digital cellular wireless telecommunication network (120, 1030), the method comprising:
- a mobile telecommunication device (110) receiving (923) a first page (210, 610) of digital content having been generated by a sender device (130, 1015, 1031-1035) via a network connection of the telecommunication network, the mobile telecommunication device being battery-powered (114) and comprising a processor (111) and a display (118), wherein the state of the first page is set to a reading state (222) by the sender device or by the mobile telecommunication device, wherein the first page being set to reading state indicates that the first page comprises a default set of displayed UI elements and comprises a default set of user-activatable functions that are enabled without restriction;
- the mobile telecommunication device displaying (924) the first page on its display;
- the mobile telecommunication device sending (926) a request for a second page (910) of digital content to the sender device, the digital content of the second page being sequentially receivable via the network in parts, the sequentially received parts being renderable by the mobile telecommunication device before the second page is received completely;
- the mobile telecommunication device starting receiving (927) the second page of digital content via the network connection from the sender device;
- predicting (930) if a time period required for completely receiving the second page via the network connection and for rendering the second page of digital content is greater than a predefined first time period; and
- in case a) the required time period is predicted not to be greater than the first time period, the mobile telecommunication device immediately rendering and displaying (932) the sequentially received parts on the display also before the second page is received completely;
- in case b) the required time period is predicted to be greater than the first time period:
o setting (934) the state of the first page of digital content to a retiring state such that the first page does not disappear but merely changes its state, wherein the retiring state of the first page indicates that the second page was requested but is not ready for displaying its complete digital content yet;
o the mobile telecommunication device receiving (936) the second page in the background and delaying the rendering and displaying of the second page at least until the second page is received completely; and
o the mobile telecommunication device delaying a starting of a rendering application until the second page is received completely, and using the rendering application for rendering the received second page; or
o depriorising the rendering of the received second page and priorizing application programs executed concurrently to the rendering by the mobile telecommunication device; and/or
o restricting CPU consumption by the rendering of the received second page to a maximum value; and
o after having received the second page completely, the mobile telecommunication device rendering the second page and displaying (938) the second page on the display.

2. The method of claim 1 wherein predicting if the time period required for completely receiving the second page via the network connection and for rendering the second page of digital content is greater than the first time period comprises predicting the time period required for receiving the second page via the network by:
∘ the mobile telecommunication device or the sender device evaluating a connectivity history, the connectivity history being indicative of the time periods having previously been required for receiving the second page completely; or
∘ the mobile telecommunication device sending a test request to the sender device and monitoring the time for receiving a response to the test request; or
∘ the sender device executing the prediction of the time required for transmitting the second page to the client device and the mobile telecommunication device receiving the predicted time for transmission and using the predicted time for transmission as the predicted time period required for receiving the second page; or
∘ the mobile telecommunication device or the sender device performing a heuristics algorithm using a current bandwidth of the network connection between the sender device and the mobile telecommunication device as input.

3. The method of any one of the previous claims, wherein predicting if the time period required for completely receiving the second page via the network connection and for rendering the second page of digital content is greater than the first time period comprises predicting the time period required for rendering the second page by:
o the mobile telecommunication device evaluating a rendering history, the rendering history being indicative of the rendering times of the second page having been rendered previously; or
∘ the mobile telecommunication device rendering a test page and monitoring the time for rendering the test page; or
∘ the mobile telecommunication device performing a heuristics algorithm using a current free CPU capacity and/or the total available CPU capacity and/or the device type of the mobile telecommunication device as input; or
∘ the sender device performing a heuristics algorithm using type and/or amount of the digital content of the generated second page or a device-type of the mobile telecommunication device as input.

4. The method of claim any one of the previous claims,
- wherein one or more navigational links on the first page are enabled when the state of the first page is set to the reading state; and
- wherein the one or more navigational links on the first page are disabled when the state of the first page is set to the retiring state.

5. The method of any one of the previous claims, wherein the method for case b) further comprises:
- upon the mobile telecommunication device determining that the second page is has been received and rendered completely, the mobile telecommunication device setting the state of the first page to a transacting state, wherein the first page in transacting state is ready for being replaced by the completely received and completely rendered second page.

6. The method of claim 5, further comprising:
- upon the mobile telecommunication device in case b) determining that the second page is received and rendered completely, the mobile telecommunication device emitting a visual and/or acoustic notification (710) that the second page is ready for display; or
- in case b) at a predefined second time period before the second page is predicted to be received and rendered completely, the mobile telecommunication device emitting a visual and/or acoustic notification (710) that the second page is ready for display.

7. The method of claim 5 or 6, wherein the method for case b) further comprises:
- displaying a GUI element as part of the first page when the first page has transacting state, the GUI element enabling a user to submit a termination request, the GUI element being absent from the first page in reading state;
- evaluating if the state of the first page has been set to transacting state for longer than a predefined third time period without detecting a termination request;
- if the state of the first page has been set to transacting state for longer than the third time period without detecting a termination request, automatically displaying the second page, thereby replacing the first page on the display.

8. The method of claim 7, further comprising:
- displaying a repeatedly updated visual indicator (710) on the display of the mobile telecommunication device, wherein the visual indicator disappears in proportion to the expiration of the third time period.

9. The method of any one of the previous claims 5-8,
- wherein the second page of digital content includes one or more images and other content;
- wherein in case a) the immediate rendering and displaying of the parts is performed in accordance with the sequentially received parts of the second page and irrespective of whether said parts comprise the one or more images or the other content;
- wherein in case b) the status of the first page is set to transacting state when the other content has been received and rendered completely irrespective of whether the images have also been received and rendered completely; wherein the delaying of the displaying of the second page is aborted when the mobile telecommunication device has received and rendered the other content completely irrespective of the one or more images; and wherein the displaying of the second page is performed immediately after the mobile telecommunication device having rendered the other content completely, wherein the displayed second page comprises at least the completely rendered other content.

10. A non-transitory computer readable storage medium storing one or more programs, the one or more programs comprising instructions which, when executed by a processor, cause the processor to execute a method of any one of the previous claims.

11. A mobile telecommunication device (110) being connectable to a sender device (130, 1015, 1031-1035) via a network connection of a digital cellular wireless telecommunication network (120, 1030), the mobile telecommunication device being battery-powered and comprising a processor and a display and memory storing instructions configured for:
- receiving (923) a first page (210, 610) of digital content from the sender device via the network connection, wherein the state of the first page is set to a reading state (222) by the sender device or by the mobile telecommunication device such that the first page does not disappear but merely changes its state, wherein the first page being set to reading state indicates that the first page comprises a default set of displayed UI elements and comprises a default set of user-activatable functions that are enabled without restriction;
- displaying (924) the first page on the display;
- sending (926) a request for a second page of digital content to the sender device, the digital content of the second page being sequentially receivable via the network in parts, the sequentially received parts being renderable by the mobile telecommunication device before the second page is received completely;
- predicting (930), alone or in interoperation with the sender device, if a time period required for completely receiving the second page via the network connection and for rendering the second page of digital content is greater than a predefined first time period; and
- in case a) the required time period is predicted not to be greater than the first time period, the mobile telecommunication device immediately rendering and displaying (932) the sequentially received parts on the display before the second page was received completely;
- in case b) the required time period is predicted to be greater than the first time period:
∘ setting (934) the state of the first page of digital content to a retiring state such that the first page does not dissapear but merely changes its state, wherein the retiring state of the first page indicates that the second page was requested but is not ready for displaying its complete digital content yet;
∘ the mobile telecommunication device receiving (936) the received second page in the background and delaying the rendering and displaying of the second page at least until the second page is received completely; and
∘ the mobile telecommunication device delaying a starting of a rendering application until the second page is received completely, and using the rendering application for rendering the received second page; or
∘ depriorising the rendering of the received second page and priorizing application programs executed concurrently to the rendering by the mobile telecommunication device; and/or
∘ restricting CPU consumption by the rendering of the received second page to a maximum value; and
∘ after having received the second page completely, the mobile telecommunication device rendering (938) the second page and displaying the second page on the display.

12. A telecommunication system comprising one or more mobile telecommunication devices (110) of claim 11 and the sender device.

## Patentansprüche

1. Telekommunikationsverfahren zum Übermitteln von Datenseiten über ein digitales, zelluläres, drahtloses Telekommunikationsnetz, (120, 1030), wobei das Verfahren umfasst:
- Empfangen (923) einer ersten Seite (210, 610) mit digitalem Inhalt, der von einer Sendervorrichtung (130, 1015, 1031-1035) erzeugt worden ist, durch eine mobile Telekommunikationsvorrichtung (110) über eine Netzverbindung des Telekommunikationsnetzes, wobei die mobile Telekommunikationsvorrichtung batteriebetrieben ist (114) und einen Prozessor (111) und eine Anzeige (118) umfasst, wobei der Status der ersten Seite von der Sendervorrichtung oder von der mobilen Telekommunikationsvorrichtung auf einen Lesestatus (222) eingestellt wird, wobei die Tatsache, dass die erste Seite auf einen Lesestatus eingestellt wird, angibt, dass die erste Seite einen voreingestellten Satz von UI-Elementen umfasst und einen voreingestellten Satz von nutzeraktivierbaren Funktionen umfasst, die ohne Beschränkung freigegeben sind;
- Anzeigen (924) der ersten Seite durch die mobile Telekommunikationsvorrichtung auf ihrer Anzeige;
- Senden (926) einer Anfrage nach einer zweiten Seite (910) mit digitalem Inhalt an die Sendervorrichtung durch die mobile Telekommunikationsvorrichtung, wobei der digitale Inhalt der zweiten Seite über das Netz in Teilen hintereinander empfangbar ist, wobei die hintereinander empfangenen Teile von der mobilen Telekommunikationsvorrichtung ausgabebereit gemacht werden können, bevor die zweite Seite vollständig empfangen worden ist;
- Beginnen mit dem Empfangen (927) der zweiten Seite mit digitalem Inhalt von der Sendervorrichtung über die Netzverbindung durch die mobile Telekommunikationsvorrichtung;
- Prognostizieren (930), ob ein Zeitraum, der für das vollständige Empfangen der zweiten Seite über die Netzverbindung und das Ausgabebereitmachen der zweiten Seite mit digitalem Inhalt notwendig ist, länger ist als ein vordefinierter erster Zeitraum; und
- falls a) prognostiziert wird, dass der notwendige Zeitraum nicht länger ist als der erste Zeitraum, sofortiges Ausgabebereitmachen und Anzeigen (932) der hintereinander empfangenen Teile auf der Anzeige durch die mobile Telekommunikationsvorrichtung, auch bevor die zweite Seite vollständig empfangen worden ist;
- falls b) prognostiziert wird, dass der notwendige Zeitraum länger ist als der erste Zeitraum:
∘ Einstellen (934) des Status der ersten Seite mit digitalem Inhalt auf einen Ruhestatus, so dass die erste Seite nicht verschwindet, sondern lediglich ihren Status ändert, wobei der Ruhestatus der ersten Seite anzeigt, dass die zweite Seite angefragt wurde, aber noch nicht zur Anzeige ihres vollständigen digitalen Inhalts bereit ist;
∘ Empfangen (936) der zweiten Seite im Hintergrund durch die mobile Telekommunikationsvorrichtung und Verzögern des Ausgabebereitmachens und des Anzeigens der zweiten Seite zumindest so lange, bis die zweite Seite vollständig empfangen worden ist; und
∘ Verzögern eines Starts einer Rendering-Anwendung durch die mobile Telekommunikationsvorrichtung, bis die zweite Seite vollständig empfangen worden ist, und Verwenden der Rendering-Anwendung, um die empfangene zweite Seite ausgabebereit zu machen; oder
∘ Depriorisieren der Ausgabebereitmachung der empfangenen zweiten Seite und Priorisieren von Anwendungsprogrammen, die gleichzeitig mit der Ausgabebereitmachung durch die mobile Telekommunikationsvorrichtung ausgeführt werden, und/oder
∘ Beschränken eines CPU-Verbrauchs für das Ausgabebereitmachen der empfangenen zweiten Seite auf einen maximalen Wert; und
∘ Bereitmachen zur Ausgabe der zweiten Seite und Anzeigen (938) der zweiten Seite auf der Anzeige durch die mobile Telekommunikationsvorrichtung, nachdem die zweite Seite vollständig empfangen worden ist.

2. Verfahren nach Anspruch 1, wobei das Prognostizieren, ob der Zeitraum, der notwendig ist, um die zweite Seite vollständig über die Netzverbindung zu empfangen und um die zweite Seite mit digitalem Inhalt ausgabebereit zu machen, länger ist als der erste Zeitraum, das Prognostizieren des Zeitraums, der notwendig ist, um die zweite Seite über das Netz zu empfangen, umfasst durch:
∘ Evaluieren eines Konnektivitätsverlaufs durch die mobile Telekommunikationsvorrichtung oder die Sendervorrichtung, wobei der Konnektivitätsverlauf die Zeiträume angibt, die zuvor notwendig waren, um die zweite Seite vollständig zu empfangen; oder
∘ Senden einer Testanforderung an die Sendervorrichtung durch die mobile Telekommunikationsvorrichtung und Überwachen der Zeit zum Empfangen einer Antwort auf die Testanforderung; oder
∘ Ausführen der Prognostizierung der Zeit, die zum Senden der zweiten Seite an die Client-Vorrichtung notwendig ist, durch die Sendervorrichtung und Empfangen der prognostizierten Sendezeit und Verwenden der prognostizierten Sendezeit als prognostizierten Zeitraum, der zum Empfangen der zweiten Seite notwendig ist, durch die mobile Telekommunikationsvorrichtung; oder
∘ Durchführen eines heuristischen Algorithmus durch die mobile Telekommunikationsvorrichtung oder die Sendervorrichtung unter Verwendung einer aktuellen Bandbreite der Netzverbindung zwischen der Sendervorrichtung und der mobilen Telekommunikationsvorrichtung als Eingabe.

3. Verfahren nach einem der vorangehenden Ansprüche, wobei das Prognostizieren, ob der Zeitraum, der notwendig ist, um die zweite Seite vollständig über die Netzverbindung zu empfangen und um die zweite Seite mit digitalem Inhalt ausgabebereit zu machen, länger ist als der erste Zeitraum, das Prognostizieren des Zeitraums, der notwendig ist, um die zweite Seite auszugeben, umfasst durch:
∘ Evaluieren eines Rendering-Verlaufs durch die mobile Telekommunikationsvorrichtung, wobei der Rendering-Verlauf die Rendering-Zeiten der zweiten Seite angibt, die zuvor ausgabebereit gemacht worden ist; oder
∘ Bereitmachen einer Testseite zur Ausgabe und Überwachen der Zeit, um die Testseite ausgabebereit zu machen, durch die mobile Telekommunikationsvorrichtung; oder
∘ Durchführen eines heuristischen Algorithmus durch die mobile Telekommunikationsvorrichtung unter Verwendung einer aktuellen freien CPU-Kapazität und/oder der insgesamt verfügbaren CPU-Kapazität und/oder des Vorrichtungstyps der mobilen Telekommunikationsvorrichtung als Eingabe; oder
∘ Durchführen eines heuristischen Algorithmus durch die Sendervorrichtung unter Verwendung des Typs und/oder der Menge des digitalen Inhalts der erzeugten zweiten Seite oder eines Vorrichtungstyps der mobilen Telekommunikationsvorrichtung als Eingabe.

4. Verfahren nach einem der vorangehenden Ansprüche,
- wobei eine oder mehrere Navigationsverknüpfungen auf der ersten Seite freigegeben werden, wenn der Status der ersten Seite auf den Lesestatus eingestellt ist; und
- wobei die eine oder die mehreren Navigationsverknüpfungen auf der ersten Seite nicht freigegeben werden, wenn der Status der ersten Seite auf den Ruhestatus eingestellt ist.

5. Verfahren nach einem der vorangehenden Ansprüche, wobei das Verfahren für den Fall b) ferner umfasst:
- Einstellen des Status der ersten Seite auf einen Transaktionsstatus durch die mobile Telekommunikationsvorrichtung, nachdem die mobile Telekommunikationsvorrichtung bestimmt hat, dass die zweite Seite vollständig empfangen und ausgabebereit gemacht worden ist, wobei die erste Seite im Transaktionsstatus bereit ist, gegen die vollständig empfangene und vollständig ausgabebereit gemachte Seite ausgetauscht zu werden.

6. Verfahren nach Anspruch 5, ferner umfassend:
- nachdem die mobile Telekommunikationsvorrichtung im Fall b) bestimmt hat, dass die zweite Seite vollständig empfangen und ausgabebereit gemacht worden ist: Emittieren einer visuellen und/oder akustischen Mitteilung (710), dass die zweite Seite bereit zu Anzeige ist, durch die mobile Telekommunikationsvorrichtung; oder
- im Fall b): Emittieren einer visuellen und/oder akustischen Mitteilung (710), dass die zweite Seite bereit zu Anzeige ist, durch die mobile Telekommunikationsvorrichtung in einem vordefinierten zweiten Zeitraum bevor die zweite Seite der Prognose gemäß vollständig empfangen und ausgabebereit gemacht wird.

7. Verfahren nach Anspruch 5 oder 6, wobei das Verfahren für Fall b) ferner umfasst:
- Anzeigen eines GUI-Elements als Teil der ersten Seite, wenn die erste Seite einen Transaktionsstatus aufweist, wobei das GUI-Element einen Anwender in die Lage versetzt, eine Beendigungsanfrage zu stellen, wobei das GUI-Element auf der ersten Seite im Lesestatus fehlt;
- Evaluieren, ob der Status der ersten Seite für länger als einen vordefinierten dritten Zeitraum auf einen Transaktionsstatus eingestellt gewesen ist, ohne dass eine Beendigungsanfrage erfasst wird;
- wenn der Status der ersten Seite für länger als den dritten Zeitraum auf den Transaktionsstatus eingestellt gewesen ist, ohne dass eine Beendigungsanfrage erfasst wird, automatisch Anzeigen der zweiten Seite, wodurch die erste Seite auf der Anzeige ausgetauscht wird.

8. Verfahren nach Anspruch 7, ferner umfassend:
- Anzeigen eines wiederholt aktualisierten visuellen Hinweises (710) auf der Anzeige der mobilen Telekommunikationsvorrichtung, wobei der visuelle Hinweis im Verhältnis zum Ablauf des dritten Zeitraums verschwindet.

9. Verfahren nach einem der vorangehenden Ansprüche 5-8,
- wobei die zweite Seite mit digitalem Inhalt ein oder mehrere Bilder und anderen Inhalt beinhaltet;
- wobei im Fall (a) das sofortige Bereitmachen zum Ausgeben und das Anzeigen der Teile gemäß den hintereinander empfangenen Teilen der zweiten Seite und unabhängig davon durchgeführt wird, ob die Teile das eine oder die mehreren Bilder oder den anderen Inhalt umfassen;
- wobei im Fall b) der Status der ersten Seite auf einen Transaktionsstatus eingestellt wird, wenn der andere Inhalt vollständig empfangen und ausgabebereit gemacht worden ist, und zwar unabhängig davon, ob die Bilder ebenfalls vollständig empfangen und ausgabebereit gemacht worden sind; wobei das Verzögern des Anzeigens der zweiten Seite abgebrochen wird, wenn die mobile Telekommunikationsvorrichtung den anderen Inhalt vollständig empfangen und ausgabebereit gemacht hat, und zwar unabhängig von dem einen oder den mehreren Bildern; und wobei das Anzeigen der zweiten Seite unmittelbar nachdem die mobile Telekommunikationsvorrichtung den anderen Inhalt vollständig ausgabebereit gemacht hat, durchführt, wobei die zweite Seite zumindest den vollständig ausgabebereit gemachten anderen Inhalt umfasst.

10. Nichtflüchtiges, computerlesbares Speichermedium, in dem ein oder mehrere Programme gespeichert sind, wobei das eine oder die mehreren Programme Befehle umfassen, die, wenn sie von einem Prozessor ausgeführt werden, bewirken, dass der Prozessor ein Verfahren nach einem der vorangehenden Ansprüche ausführt.

11. Mobile Telekommunikationsvorrichtung (110), die über eine Netzverbindung eines digitalen, zellulären, drahtlosen Telekommunikationsnetzes (120, 1030) mit einer Sendervorrichtung (130, 1015, 1031-1035) verbindbar ist, wobei die mobile Telekommunikationsvorrichtung batteriebetrieben ist und einen Prozessor und eine Anzeige und einen Speicher umfasst, der Befehle speichert, und die für folgendes ausgelegt ist:
- Empfangen (923) einer ersten Seite (210, 610) mit digitalem Inhalt von der Sendervorrichtung über die Netzverbindung, wobei der Status der ersten Seite von der Sendervorrichtung oder von der mobilen Telekommunikationsvorrichtung auf einen Lesestatus eingestellt wird (222), so dass die erste Seite nicht verschwindet, sondern einfach ihren Status ändert, wobei die Tatsache, dass die erste Seite auf einen Lesestatus eingestellt wird, angibt, dass die erste Seite einen voreingestellten Satz von UI-Elementen umfasst und einen voreingestellten Satz von nutzeraktivierbaren Funktionen umfasst, die ohne Beschränkung freigegeben sind;
- Anzeigen (924) der ersten Seite auf der Anzeige;
- Senden (926) einer Anfrage nach einer zweiten Seite mit digitalem Inhalt an die Sendervorrichtung, wobei der digitale Inhalt der zweiten Seite über das Netz in Teilen hintereinander empfangbar ist, wobei die hintereinander empfangenen Teile von der mobilen Telekommunikationsvorrichtung ausgabebereit gemacht werden können, bevor die zweite Seite vollständig empfangen wird;
- Prognostizieren (930), allein oder in Zusammenarbeit mit der Sendervorrichtung, ob ein Zeitraum, der für das vollständige Empfangen der zweiten Seite über die Netzverbindung und das Bereitmachen zum Ausgeben der zweiten Seite mit digitalem Inhalt notwendig ist, länger ist als ein vordefinierter erster Zeitraum; und
- wobei, falls a) prognostiziert wird, dass der notwendige Zeitraum nicht länger ist als der erste Zeitraum, die mobile Telekommunikationsvorrichtung die hintereinander empfangenen Teile sofort anzeigebereit macht und auf der Anzeige anzeigt (932), bevor die zweite Seite vollständig empfangen worden ist;
- wobei, falls (b) prognostiziert wird, dass der notwendige Zeitraum länger ist als der erste Zeitraum:
∘ der Status der ersten Seite mit digitalem Inhalt auf einen Ruhestatus eingestellt wird (934), so dass die erste Seite nicht verschwindet, sondern lediglich ihren Status ändert, wobei der Ruhestatus der ersten Seite anzeigt, dass die zweite Seite angefragt wurde, aber noch nicht zur Anzeige ihres vollständigen digitalen Inhalts bereit ist;
∘ die mobile Telekommunikationsvorrichtung die empfangene zweite Seite im Hintergrund empfängt (936) und das Bereitmachen zur Ausgabe und das Anzeigen der zweiten Seite zumindest so lange verzögert, bis die zweite Seite vollständig empfangen worden ist; und
∘ die mobile Telekommunikationsvorrichtung einen Start einer Rendering-Anwendung verzögert, bis die zweite Seite vollständig empfangen worden ist, und die Rendering-Anwendung verwendet, um die empfangene zweite Seite ausgabebereit zu machen; oder
∘ durch die mobile Telekommunikationsvorrichtung das Bereitmachen der empfangenen zweiten Seite zum Ausgeben depriorisiert wird und Anwendungsprogramme, die gleichzeitig mit dem Ausgabebereitmachen ausgeführt werden, priorisiert werden; und/oder
∘ ein CPU-Verbrauch für das Bereitmachen der empfangenen zweiten Seite zum Ausgeben auf einen maximalen Wert beschränkt wird; und
∘ die zweite Seite durch die mobile Telekommunikationsvorrichtung ausgabebereit gemacht wird (938) und auf der Anzeige angezeigt wird, nachdem die zweite Seite vollständig empfangen worden ist.

12. Telekommunikationssystem, eine oder mehrere mobile Telekommunikationsvorrichtungen (110) nach Anspruch 11 und die Sendervorrichtung umfassend.

## Revendications

1. Procédé de télécommunication pour la communication de pages de données par l'intermédiaire d'un réseau de télécommunication cellulaire numérique sans fil (120, 1030), le procédé comprenant :
- un dispositif de télécommunication mobile (110) recevant (923) une première page (210, 610) de contenu numérique qui a été générée par un dispositif d'envoi (130, 1015, 1031 à 1035) par l'intermédiaire d'une connexion réseau du réseau de télécommunication, le dispositif mobile de télécommunication étant alimenté par batterie (114) et qui comprend un processeur (111) et un affichage (118), où l'état de la première page est réglé sur un état de lecture (222) par le dispositif d'envoi ou par le dispositif mobile de télécommunication, où la première page étant mise en état de lecture indique que la première page comprend un paramétrage par défaut des éléments de l'UI (interface utilisateur) affichés et comprend un paramétrage par défaut de fonctions activables par l'utilisateur qui sont activées sans limitation ;
- le dispositif mobile de télécommunication visualisant (924) la première page sur son affichage ;
- le dispositif mobile de télécommunication envoyant (926) une demande pour une seconde page (910) de contenu numérique au dispositif d'envoi, le contenu numérique de la seconde page étant séquentiellement recevable par fractions par l'intermédiaire du réseau, les fractions reçues séquentiellement étant restituables par le dispositif mobile de télécommunication avant que la seconde page ne soit reçue dans son intégralité ;
- le dispositif mobile de télécommunication débutant la réception (927) de la seconde page de contenu numérique par l'intermédiaire de la connexion réseau à partir du dispositif d'envoi ;
- la prévision (930) qu'une durée nécessaire pour recevoir l'intégralité de la seconde page par l'intermédiaire de la connexion réseau et pour restituer la seconde page de contenu numérique est supérieure à une première durée prédéfinie ; et
- dans le cas a) où il n'est pas prévu que la durée nécessaire soit supérieure à la première durée, le dispositif mobile de télécommunication restitue et visualise immédiatement (932) les fractions reçues séquentiellement sur l'affichage également avant que la seconde page ne soit reçue dans son intégralité ;
- dans le cas b) où il est prévu que la durée nécessaire soit supérieure à la première durée :
o la réglage (934) de l'état de la première page de contenu numérique dans un état de retrait tel que la première page ne disparaisse pas mais change simplement son état, dans lequel l'état de retrait de la première page indique que la seconde page a été demandée mais n'est pas encore prête à afficher l'intégralité de son contenu numérique ;
∘ le dispositif mobile de télécommunication reçoit (936) la seconde page en arrière-plan et diffère la restitution et l'affichage de la seconde page au moins jusqu'à ce que la seconde page soit reçue dans son intégralité ; et
∘ le dispositif mobile de télécommunication diffère un démarrage d'une application de restitution jusqu'à ce que la seconde page soit reçue dans son intégralité, et utilise l'application de restitution pour restituer la seconde page reçue ; ou
∘ le retrait de la priorité à la restitution de la seconde page reçue et l'octroi de la priorité aux programmes d'application exécutés simultanément à la restitution par le dispositif mobile de télécommunication ; et/ou
∘ la limitation de la consommation du CPU (microprocesseur principal) à une valeur maximale par la restitution de la seconde page reçue ; et
∘ après la réception de l'intégralité de la seconde page, le dispositif mobile de télécommunication restitue la seconde page et visualise (938) la seconde page sur l'affichage.

2. Procédé selon la revendication 1, dans lequel la prévision que la durée nécessaire pour recevoir la seconde page dans son intégralité par l'intermédiaire de la connexion réseau et pour restituer la seconde page de contenu numérique est supérieure à la première durée comprend la prévision de la durée nécessaire pour recevoir la seconde page par l'intermédiaire du réseau par :
∘ le dispositif mobile de télécommunication ou le dispositif d'envoi qui évalue les antécédents de la connectivité, les antécédents de la connectivité étant l'indication des durées ayant été précédemment nécessaires pour recevoir la seconde page dans son intégralité ; ou
∘ le dispositif mobile de télécommunication qui envoie une demande de test au dispositif d'envoi et qui contrôle le temps de réception d'une réponse à la demande de test ; ou
∘ le dispositif d'envoi qui exécute la prévision de la durée nécessaire pour transmettre la seconde page au dispositif client et le dispositif mobile de télécommunication qui reçoit la durée prévue pour la transmission et qui utilise la durée prévue pour la transmission comme la durée prévue pour recevoir la seconde page ; ou
∘ le dispositif mobile de télécommunication ou le dispositif d'envoi qui exécute un algorithme heuristique en utilisant la bande passante en vigueur de la connexion réseau entre le dispositif d'envoi et le dispositif mobile de télécommunication en tant qu'entrée.

3. Procédé selon l'une quelconque des revendications précédentes, dans lequel la prévision que le durée nécessaire pour recevoir la seconde page dans son intégralité par l'intermédiaire de la connexion réseau et pour restituer la seconde page de contenu numérique est supérieure à la première durée comprend la prévision de la durée nécessaire pour restituer la seconde page par :
∘ le dispositif mobile de télécommunication qui évalue les antécédents de la restitution, les antécédents de la restitution étant l'indication des durées de restitution de la seconde page qui a été restituée précédemment ; ou
∘ le dispositif mobile de télécommunication qui restitue une page de test et qui contrôle la durée de restitution de la page de test ; ou
∘ le dispositif mobile de télécommunication qui exécute un algorithme heuristique en utilisant une capacité du CPU libre sur le moment et/ou la totalité de la capacité disponible du CPU et/ou le type de dispositif du dispositif mobile de télécommunication en tant qu'entrée ; ou
∘ le dispositif d'envoi qui exécute l'algorithme heuristique en utilisant le type et/ou la quantité de contenu numérique de la seconde page générée ou un dispositif type du dispositif mobile de télécommunication en tant qu'entrée.

4. Procédé selon l'une quelconque des revendications précédentes,
- dans lequel un ou plusieurs liens de navigation de la première page sont activés lorsque l'état de la première page est mis en état de lecture ; et
- dans lequel le ou les plusieurs liens de navigation de la première page sont désactivés lorsque l'état de la première page est mis en état de restitution.

5. Procédé selon l'une quelconque des revendications précédentes, dans lequel le procédé dans le cas b) comprend en outre :
- dès que le dispositif mobile de télécommunication détermine que la seconde page est a été reçue et restituée dans son intégralité, le dispositif mobile de télécommunication met l'état de la première page en état de transaction, dans lequel la première page en état de transaction est prête à être remplacée par la seconde page reçue dans son intégralité et restituée dans son intégralité.

6. Procédé selon la revendication 5, comprenant en outre :
- dès que le dispositif mobile de télécommunication dans le cas b) détermine que la seconde page est reçue et restituée dans son intégralité, le dispositif mobile de télécommunication émet une notification visuelle et/ou acoustique (710) annonçant que la seconde page est prête à être affichée ; ou
- dans le cas b) à une deuxième durée prédéfinie avant la prévision que la seconde page soit reçue et restituée dans son intégralité, le dispositif mobile de télécommunication émet une notification visuelle et/ou acoustique (710) annonçant que la seconde page est prête à être affichée.

7. Procédé selon la revendication 5 , ou 6, où le procédé dans le cas b) comprend en outre :
- l'affichage d'un élément du GUI (interface graphique) en tant que partie de la première page lorsque la première page a un état de transaction, l'élément du GUI qui autorise un utilisateur à soumettre une demande de résiliation, l'élément du GUI qui est absent de la première page dans l'état de lecture ;
- l'évaluation que l'état de la première page a été mis en état de transaction pendant une durée plus grande qu'une troisième durée prédéfinie sans détection d'une demande de résiliation ;
- si l'état de la première page a été mis en état de transaction pendant une durée plus grande que la troisième durée sans détection d'une demande de résiliation, la visualisation automatiquement de la seconde page, en remplaçant ainsi la première page sur l'affichage.

8. Procédé selon la revendication 7, comprenant en outre :
- la visualisation d'un indicateur visuel mis à jour à plusieurs reprises (710) sur l'affichage du dispositif mobile de télécommunication, dans lequel l'indicateur visuel disparaît au prorata de l'expiration de la troisième durée.

9. Procédé selon l'une quelconque des revendications 5 à 8 précédentes,
- dans lequel la seconde page de contenu numérique comporte une ou plusieurs images et d'autres contenus ;
- dans lequel, dans le cas a), la restitution et l'affichage immédiats des fractions sont réalisés conformément aux fractions séquentiellement reçues de la seconde page et indépendamment du fait que lesdites fractions comprennent la ou les plusieurs images ou l'autre contenu ;
- dans lequel, dans le cas b), le statut de la première page est mis en état de transaction lorsque l'autre contenu a été reçu et restitué dans son intégralité indépendamment du fait les images aient aussi été reçues et restituées dans leur intégralité ; dans lequel le retard de l'affichage de la seconde page est annulé lorsque le dispositif mobile de télécommunication a reçu et restitué l'autre contenu dans son intégralité indépendamment de la ou des plusieurs images ; et dans lequel l'affichage de la seconde page est réalisée immédiatement après que le dispositif mobile de télécommunication ait restitué l'autre contenu dans son intégralité, dans lequel la seconde page affichée comprend au moins l'autre contenu restitué dans son intégralité.

10. Support de stockage non transitoire lisible par ordinateur stockant un ou plusieurs programmes, le ou les plusieurs programmes comprenant des instructions qui, lorsqu'elles sont exécutées par un processeur, amènent le processeur à exécuter un procédé selon l'une quelconque des revendications précédentes.

11. Dispositif mobile de télécommunication (110) qui peut être connecté à un dispositif d'envoi (130, 1015, 1031 à 1035) par l'intermédiaire d'une connexion réseau d'un réseau de télécommunication cellulaire numérique sans fil (120, 1030), le dispositif mobile de télécommunication étant alimenté par batterie et comprenant un processeur et un affichage et des instructions de stockage en mémoire configurées pour :
- recevoir (923) une première page (210, 610) d'un contenu numérique en provenance du dispositif d'envoi par l'intermédiaire de la connexion réseau, dans lequel l'état de la première page est mis en état de lecture (222) par le dispositif d'envoi ou par le dispositif mobile de télécommunication de telle sorte que la première page ne disparait pas mais change simplement son statut, dans lequel la première page qui est mise en état de lecture indique que la première page comprend un paramétrage par défaut des éléments de l'UI affichés et comprend un paramétrage par défaut de fonctions activables par l'utilisateur qui sont activées sans limitation ;
- la visualisation (924) de la première page sur l'affichage ;
- l'envoi (926) d'une demande pour une seconde page de contenu numérique au dispositif d'envoi, le contenu numérique de la seconde page étant séquentiellement recevable par fractions par l'intermédiaire du réseau, les fractions reçues séquentiellement étant restituables par le dispositif mobile de télécommunication avant que la seconde page ne soit reçue dans son intégralité ;
- la prévision (930), seule ou en fonctionnant en coopération avec le dispositif d'envoi, qu'une durée nécessaire pour recevoir l'intégralité de la seconde page par l'intermédiaire de la connexion réseau et pour restituer la seconde page de contenu numérique est supérieure à une première durée prédéfinie ; et
- dans le cas a), où il n'est pas prévu que la durée nécessaire soit supérieure à la première durée, le dispositif mobile de télécommunication restitue et visualise immédiatement (932) les fractions reçues séquentiellement sur l'affichage avant que la seconde page ne soit reçue dans son intégralité ;
- dans le cas b), où il est prévu que la durée nécessaire soit supérieure à la première durée :
∘ la mise (934) de l'état de la première page de contenu numérique en état de retrait tel que la première page ne disparaisse pas mais change simplement son état, dans lequel l'état de retrait de la première page indique que la seconde page a été demandée mais n'est pas encore prête à afficher l'intégralité de son contenu numérique ;
∘ le dispositif mobile de télécommunication reçoit (936) la seconde page reçue en arrière plan et diffère la restitution et l'affichage de la seconde page au moins jusqu'à ce que la seconde page soit reçue dans son intégralité ; et
∘ le dispositif mobile de télécommunication diffère un démarrage d'une application de restitution jusqu'à ce que la seconde page soit reçue dans son intégralité, et utilise l'application de restitution pour restituer la seconde page reçue ; ou
∘ le retrait de la priorité à la restitution de la seconde page reçue et l'octroi de la priorité aux programmes d'application exécutés simultanément à la restitution par le dispositif mobile de télécommunication ; et/ou
∘ la limitation de la consommation du CPU à une valeur maximale par la restitution de la seconde page ; et
∘ après la réception de l'intégralité de la seconde page, le dispositif mobile de télécommunication restitue (938) la seconde page et visualise la seconde page sur l'affichage.

12. Système de télécommunication comprenant un ou plusieurs dispositifs mobiles de télécommunication (110) selon la revendication 11 et le dispositif d'envoi.
